# EUROPEAN PATENT APPLICATION

(11) **EP 3 139 266 A1**
(43) Date of publication of application: **08.03.2017**
(21) Application number: 16184663.9
(22) Date of filing: 18.08.2016
(51) Int. Cl.: G06F 9/44, G06F 9/54, G06F 17/30, G06Q 20/06, H04L 12/58, H04L 29/08

(54) **APPARATUS AND METHOD FOR PROVIDING INFORMATION IN ELECTRONIC DEVICE**

(30) Priority: 19.08.2015 KR 20150117009
(71) Applicant: Samsung Electronics Co., Ltd., Suwon-si, Gyeonggi-do 16677 (KR)
(72) Inventor: SEO, Hyewon, 16677 Gyeonggi-do (KR); WOO, Jieun, 16677 Gyeonggi-do (KR); CHOI, Jinwan, 16677 Gyeonggi-do (KR)
(74) Representative: Hylarides, Paul Jacques

(57) **Abstract**

An apparatus and method in an electronic device is provided. The apparatus includes a memory, a communication interface and a processor coupled to the memory, and may implement the method, including: executing, by a processor, an application including a plurality of pages displayable by the electronic device, the plurality of pages including first and second pages corresponding respectively to first and second identifiers, identifying a target page to be displayed on a display from among the first and second pages, transmitting a target identifier corresponding to the target page to an external electronic device via a network, receiving notification information corresponding to the target identifier from the external electronic device, and displaying at least part of the notification information and the target page.

## Description

### TECHNICAL FIELD

Various embodiments of the present disclosure relate to an apparatus and method for providing information in an electronic device.

### BACKGROUND

As mobile electronic devices, e.g., smartphones, tablet personal computers (tablet PCs), etc., have become widely popular and users' demands have been various, electronic devices have made rapid progress in the field of related hardware and/software, so that the use environment has become similar to that of a person computer (PC). Electronic devices are capable of downloading various applications, e.g., music application, video application, digital broadcast application, etc., from the Internet, app stores, etc., and providing corresponding functions to the users.

When a mobile electronic device, a PC, etc., uses applications etc., it is capable of displaying a provision of separate information regarding the use of applications, e.g., a notification, on an application screen.

In order to provide information regarding a notification including a user's guide, etc., to an application of an electronic device (e.g., mobile terminal), the electronic device needs to load an Application Programing Interface (API) for displaying information at a fixed location in the application and also needs a procedure, such as a process of negotiating a standard between a server and an electronic device each time that the electronic device provides information, which is inconvenient. Additionally, in order to provide information regarding a notification including a user's guide, etc., to a web service of an electronic device (e.g., a PC), the electronic device needs to modify source codes each time that it provides the information, which causes notification to be inefficient.

### SUMMARY

The present disclosure has been made to address the above problems and disadvantages, and to provide at least the advantages described below. Accordingly, various embodiments of the present disclosure guarantee the stability of services or dynamically provide a user with content (e.g., notification information) corresponding to a designated process, such as a user's guide, etc.

The various embodiments of the present disclosure provide an apparatus and method of providing information in an electronic device.

In accordance with an aspect of the present disclosure, a method of providing information is provided. The method includes: executing, by a processor, an application including a plurality of pages displayable by the electronic device, the plurality of pages including first and second pages corresponding respectively to first and second identifiers, identifying a target page to be displayed on a display from among the first and second pages, transmitting a target identifier corresponding to the target page to an external electronic device via a network, receiving notification information corresponding to the target identifier from the external electronic device, and displaying at least part of the notification information and the target page. In accordance with another aspect of the present disclosure, a method of providing information in an electronic device is provided. The method includes: receiving, by an external electronic device via a network, at least one target identifier corresponding to a target page to be displayed on the external electronic device, identifying notification information corresponding to the received at least one target identifier; and transmitting the identified notification information to the external electronic device via the network.

In accordance with another aspect of the present disclosure, an electronic device is provided. The electronic device includes a memory storing a first identifier and a second identifier corresponding respectively to first and second pages, a communication interface, and a processor operatively coupled to the memory. The processor: receives via the communication interface at least one notification information corresponding to an application executing on an external electronic device, identifies a target page from among the first and second pages corresponding to the at least one notification information, based on one of the first identifier and the second identifier corresponding to the received at least one notification information, and controls a display to display the received at least one notification information associated with the target page.

In accordance with another aspect of the present disclosure, an apparatus for providing information is provided. The apparatus includes: a display, a memory, a communication interface, and a processor operatively coupled to the memory. The processor controls the communication interface to transmit at least one or more tagging information to a server, and receive notification information from the server corresponding to the transmitted at least one or more tagging information, and controls the display to display the received notification information based on the at least one or more tagging information.

In accordance with another aspect of the present disclosure, a non-transitory storage medium storing instructions which, when executed by at least one processor, perform a process including: executing an application including a plurality of pages displayable to a display operatively coupled to a mobile electronic device, the plurality of pages including a first page and a second page corresponding to a first identifier and a second identifier respectively, identifying a target page to be displayed on the display from among the first and second pages, transmitting to an external electronic device a target identifier corresponding to the target page from among the first identifier and the second identifier via a network, receiving notification information corresponding to the target identifier from the external electronic device, and displaying at least part of the received notification information and the target page.

### BRIEF DESCRIPTION OF THE DRAWINGS

The above and other aspects, features and advantages of the disclosure will be more apparent from the following detailed description, taken in conjunction with the accompanying drawings, in which:
FIG. 1 is a block diagram of an electronic device in a network environment, according to various embodiments of the present disclosure;
FIG. 2 is a block diagram of an electronic device according to various embodiments of the present disclosure;
FIG. 3 is a block diagram of a programming module according to various embodiments of the present disclosure;
FIG. 4 is a flowchart that describes a method for an electronic device to provide information, based on tagging information, according to various embodiments of the present disclosure;
FIG. 5 is a flowchart that describes a method for a server to provide information to an electronic device, based on tagging information, according to various embodiments of the present disclosure;
FIG. 6 is a flowchart that describes a method of providing information between an electronic device and a server, based on tagging information, according to various embodiments of the present disclosure;
FIG. 7 is a flowchart that describes a method for an electronic device to provide information, based on screen ID information, according to various embodiments of the present disclosure;
FIG. 8 is a flowchart that describes a method for a server to provide information to an electronic device, based on screen ID information, according to various embodiments of the present disclosure;
FIG. 9 is a flowchart that describes a method of providing information between an electronic device and a server, based on screen ID information, according to various embodiments of the present disclosure;
FIG. 10 is a diagram showing a user interface of an electronic device related to an information providing method, according to various embodiments of the present disclosure;
FIG. 11 is a diagram showing a user interface of an electronic device related to an information providing method, according to various embodiments of the present disclosure;
FIG. 12 is a diagram showing a user interface of an electronic device related to an information providing method, according to various embodiments of the present disclosure;
FIG. 13 is a diagram showing a user interface of an electronic device related to an information providing method, according to various embodiments of the present disclosure;
FIG. 14 is a flowchart that describes a method for an electronic device to provide information, based on a target identifier, according to various embodiments of the present disclosure; and
FIG. 15 is a flowchart that describes a method for an external electronic device to provide information to an electronic device, based on tagging information, according to various embodiments of the present disclosure.

### DETAILED DESCRIPTION

Hereinafter, the present disclosure will be described with reference to the accompanying drawings. Although specific embodiments are illustrated in the drawings and related detailed descriptions are described in the present specification, the present disclosure may have various modifications and several embodiments. However, various embodiments of the present disclosure are not limited to a specific implementation form and it should be understood that the present disclosure includes all changes and/or equivalents and substitutes included in the various embodiments of the present disclosure. In connection with descriptions of the drawings, similar components are designated by the same reference numeral.

The term "include" or "may include" which may be used in describing various embodiments of the present disclosure refers to the existence of a corresponding disclosed function, operation or component which can be used in various embodiments of the present disclosure and does not limit one or more additional functions, operations, or components. In various embodiments of the present disclosure, the terms such as "include" or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

The expression "1", "2", "first", or "second" used in various embodiments of the present disclosure may modify various components of the various embodiments but does not limit the corresponding components. For example, the above expressions do not limit the sequence and/or importance of the components. The expressions may be used for distinguishing one component from other components. For example, a first user device and a second user device indicate different user devices although both of them are user devices. For example, without departing from the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of the present disclosure are only examples for describing a specific embodiment but do not limit the various embodiments of the present disclosure. Singular forms are intended to include plural forms unless the context clearly indicates otherwise.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a communication function. For example, the electronic device may be one or a combination of a smart phone, a tablet Personal Computer (PC), a mobile phone, a video phone, an e-book reader, a desktop PC, a laptop PC, a netbook computer, a Personal Digital Assistant (PDA), a camera, a wearable device (for example, a Head-Mounted-Device (HMD) such as electronic glasses, electronic clothes, and electronic bracelet, an electronic necklace, an electronic appcessary, an electronic tattoo, and a smart watch.

According to some embodiments, the electronic device may be a smart home appliance having a communication function. The smart home appliance may include at least one of a TeleVision (TV), a Digital Video Disk (DVD) player, an audio player, an air conditioner, a cleaner, an oven, a microwave oven, a washing machine, an air cleaner, a set-top box, a TV box (for example, Samsung HomeSync™, Apple TV™, or Google TV™), game consoles, an electronic dictionary, an electronic key, a camcorder, and an electronic frame.

According to some embodiments, the electronic device may include at least one of various types of medical devices (for example, Magnetic Resonance Angiography (MRA), Magnetic Resonance Imaging (MRI), Computed Tomography (CT), a scanner, an ultrasonic device and the like), a navigation device, a Global Positioning System (GPS) receiver, an Event Data Recorder (EDR), a Flight Data Recorder (FDR), a vehicle infotainment device, electronic equipment for a ship (for example, a navigation device for ship, a gyro compass and the like), avionics, a security device, a head unit for a vehicle, an industrial or home robot, an Automatic Teller Machine (ATM) of financial institutions, and a Point Of Sale (POS) device of shops.

According to some embodiments, the electronic device may include at least one of furniture or a part of a building/structure, an electronic board, an electronic signature receiving device, a projector, and various types of measuring devices (for example, a water meter, an electricity meter, a gas meter, a radio wave meter and the like) including a camera function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (for example, an artificial intelligence electronic device) which uses an electronic device.

According to one embodiment of the present disclosure, a screen of an electronic device may be split into at least two windows according to a predefined split manner and displayed through a display of an electronic device. The windows are defined as split windows. According to one embodiment, the split windows are defined as windows displayed on a display of an electronic display not to be superposed one on another.

According to one embodiment, a popup window is defined as a window displayed on a display of an electronic device to hide or to be superposed on a portion of a screen under execution.

According to one embodiment of the present disclosure, an electronic device using split window and a popup window is capable of displaying two or more application execution screens or function execution screens. Thus, the split windows and the popup window are defined as a multi-window.

Hereinafter, an electronic device according to various embodiments will be described with reference to the accompanying drawings. As used herein, the term "user" may indicate a person who uses an electronic device or a device (e.g., an artificial intelligence electronic device) that uses an electronic device.

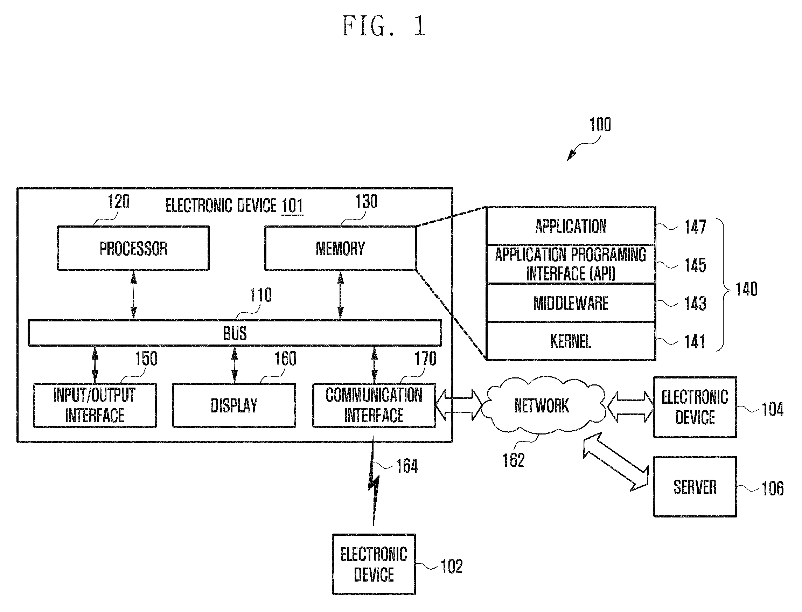

FIG. 1 illustrates a network environment 100 including an electronic device 101 according to various embodiments of the present disclosure. Referring to FIG. 1, the electronic device 100 includes a bus 110, a processor 120, a memory 130, a user input module 150, a display module 160 and a communication module 170.

The bus 110 may be a circuit connecting the above described components and transmitting communication (for example, a control message) between the above described components. The processor 120 receives commands from other components (for example, the memory 130, the user input module 150, the display module 160, the communication module 170) through the bus 110, analyzes the received commands, and executes calculation or data processing according to the analyzed commands. The memory 130 stores commands or data received from the processor 120 or other components (for example, the user input module 150, the display module 160, or the communication module 170) or generated by the processor 120 or other components. The memory 130 may include programming modules 140, for example, a kernel 141, middleware 143, an Application Programming Interface (API) 145, and an application 147. Each of the aforementioned programming modules may be implemented by software, firmware, hardware, or a combination of two or more thereof.

The kernel 141 controls or manages system resources (for example, the bus 110, the processor 120, or the memory 130) used for executing an operation or function implemented by the remaining other programming modules, for example, the middleware 143, the API 145, or the application 147. Further, the kernel 141 provides an interface for accessing individual components of the electronic device 101 from the middleware 143, the API 145, or the application 147 to control or manage the components. The middleware 143 performs a relay function of allowing the API 145 or the application 147 to communicate with the kernel 141 to exchange data. Further, in operation requests received from the application 147, the middleware 143 performs a control for the operation requests (for example, scheduling or load balancing) by using a method of assigning a priority, by which system resources (for example, the bus 110, the processor 120, the memory 130 and the like) of the electronic device 100 can be used, to the application 134.

The API 145 is an interface by which the application 147 can control a function provided by the kernel 141 or the middleware 143 and includes, for example, at least one interface or function (for example, command) for a file control, a window control, image processing, or a character control. The user input module 150 can receive, for example, a command and/or data from a user, and transfer the received command and/or data to the processor 120 and/or the memory 130 through the bus 110. The display module 160 can display an image, a video, and/or data to a user.

According to an embodiment, the display module 160 may display a graphic user interface image for interaction between the user and the electronic device 100. According to various embodiments, the graphic user interface image may include interface information to activate a function for correcting color of the image to be projected onto the screen. The interface information may be in the form of, for example, a button, a menu, or an icon. The communication module 170 connects communication between the electronic device 100 and the external device (for example, electronic device 102, 104 or server 106). For example, the communication interface 170 may access a network 162 through wireless or wired communication to communicate with the external device. The wireless communication includes at least one of, for example, WiFi, BlueTooth (BT), Near Field Communication (NFC), a Global Positioning System (GPS), and cellular communication (for example, LTE, LTE-A, CDMA, WCDMA, UMTS, WiBro or GSM). The wired communication may include at least one of, for example, a Universal Serial Bus (USB), a High Definition Multimedia Interface (HDMI), Recommended Standard 232 (RS-232), and a Plain Old Telephone Service (POTS).

According to an embodiment, the server 106 supports driving of the electronic device 100 by performing at least one operation (or function) implemented by the electronic device 100. For example, the server 106 may include a communication control server module that supports the communication module 170 implemented in the electronic device 100. For example, the communication control server module may include at least one of the components of the communication module 170 to perform (on behalf of) at least one operations performed by the communication module 170.

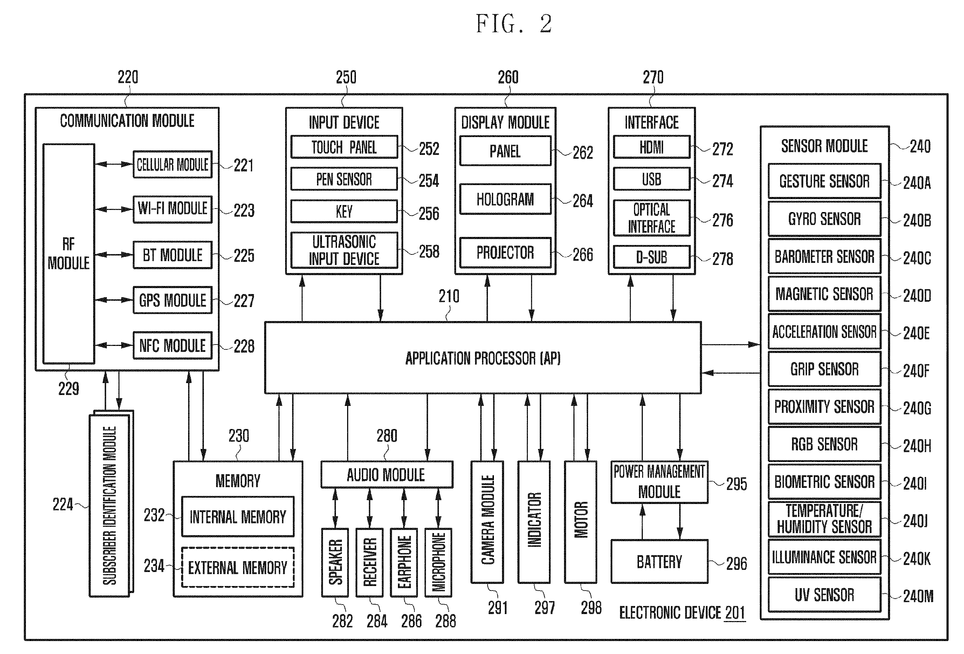

FIG. 2 is a block diagram of an electronic device 201 according to various embodiments of the present disclosure. The electronic device 201 may configure, for example, a whole or a part of the electronic device 100 illustrated in FIG. 1. Referring to FIG. 2, the electronic device 201 includes one or more Application Processors (APs) 210, a communication module 220, a Subscriber Identification Module (SIM) card 224, a memory 230, a sensor module 240, an input device 250, a display 260, an interface 270, an audio module 280, a camera module 291, a power managing module 295, a battery 296, an indicator 297, and a motor 298.

The AP 210 operates an operating system (OS) or an application program so as to control a plurality of hardware or software component elements connected to the AP 210 and execute various data processing and calculations including multimedia data. The AP 210 may be implemented by, for example, a System on Chip (SoC). According to an embodiment, the processor 210 may further include a Graphic Processing Unit (GPU).

The communication module 220 (for example, communication module 170) transmits/receives data in communication between different electronic devices (for example, the electronic device 104 and the server 106) connected to the electronic device 201 (for example, electronic device 100) through a network. According to an embodiment, the communication module 220 includes a cellular module 221, a WiFi module 223, a BlueTooth (BT) module 225, a Global Positioning System (GPS) module 227, a Near Field Communication (NFC) module 228, and a Radio Frequency (RF) module 229.

The cellular module 221 provides a voice, a call, a video call, a Short Message Service (SMS), or an Internet service through a communication network (for example, Long Term Evolution (LTE), LTE-A, Code Division Multiple Access (CDMA), Wideband CDMA (WCDMA), UMTS, WiBro, GSM or the like). Further, the cellular module 221 may distinguish and authenticate electronic devices within a communication network by using a subscriber identification module (for example, the SIM card 224). According to an embodiment, the cellular module 221 performs at least some of the functions which can be provided by the AP 210. For example, the cellular module 221 may perform at least some of the multimedia control functions.

According to an embodiment, the cellular module 221 may include a Communication Processor (CP). Further, the cellular module 221 may be implemented by, for example, an SoC.

According to an embodiment, the AP 210 or the cellular module 221 (for example, communication processor) may load a command or data received from at least one of a non-volatile memory and other components connected to each of the AP 210 and the cellular module 221 to a volatile memory and process the loaded command or data. Further, the AP 210 or the cellular module 221 may store data received from at least one of other components or generated by at least one of other components in a non-volatile memory.

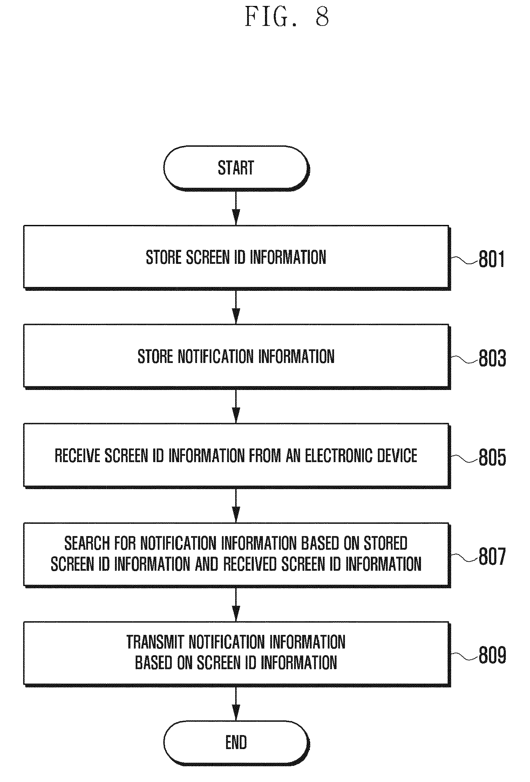

Each of the WiFi module 223, the BT module 225, the GPS module 227, and the NFC module 228 may include, for example, a processor for processing data transmitted/received through the corresponding module. Although the cellular module 221, the WiFi module 223, the BT module 225, the GPS module 227, and the NFC module 228 are illustrated as blocks separate from each other in FIG. 8, at least some (for example, two or more) of the cellular module 221, the WiFi module 223, the BT module 225, the GPS module 227, and the NFC module 228 may be included in one Integrated Chip (IC) or one IC package according to one embodiment. For example, at least some (for example, the communication processor corresponding to the cellular module 221 and the WiFi processor corresponding to the WiFi module 223) of the processors corresponding to the cellular module 221, the WiFi module 223, the BT module 225, the GPS module 227, and the NFC module 228 may be implemented by one SoC.

The RF module 229 transmits/receives data, for example, an RF signal. Although not illustrated, the RF module 229 may include, for example, a transceiver, a Power Amp Module (PAM), a frequency filter, a Low Noise Amplifier (LNA) or the like. Further, the RF module 229 may further include a component for transmitting/receiving electronic waves over a free air space in wireless communication, for example, a conductor, a conducting wire, or the like. Although the cellular module 221, the WiFi module 223, the BT module 225, the GPS module 227, and the NFC module 228 share one RF module 229 in FIG. 2, at least one of the cellular module 221, the WiFi module 223, the BT module 225, the GPS module 227, and the NFC module 228 may transmit/receive an RF signal through a separate RF module according to one embodiment.

The SIM card 224 is a card including a Subscriber Identification Module and may be inserted into a slot formed in a particular portion of the electronic device. The SIM card 224 includes unique identification information (for example, Integrated Circuit Card IDentifier (ICCID)) or subscriber information (for example, International Mobile Subscriber Identity (IMSI).

The memory 230 (for example, memory 130) may include an internal memory 232 or an external memory 234. The internal memory 232 may include, for example, at least one of a volatile memory (for example, a Random Access Memory (RAM), a dynamic RAM (DRAM), a static RAM (SRAM), a synchronous dynamic RAM (SDRAM), and the like), and a non-volatile Memory (for example, a Read Only Memory (ROM), a one-time programmable ROM (OTPROM), a programmable ROM (PROM), an erasable and programmable ROM (EPROM), an electrically erasable and programmable ROM (EEPROM), a mask ROM, a flash ROM, a NAND flash memory, an NOR flash memory, and the like).

According to an embodiment, the internal memory 232 may be a Solid State Drive (SSD). The external memory 234 may further include a flash drive, for example, a Compact Flash (CF), a Secure Digital (SD), a Micro Secure Digital (Micro-SD), a Mini Secure Digital (Mini-SD), an extreme Digital (xD), or a memory stick. The external memory 234 may be functionally connected to the electronic device 201 through various interfaces. According to an embodiment, the electronic device 201 may further include a storage device (or storage medium) such as a hard drive.

The sensor module 240 measures a physical quantity or detects an operation state of the electronic device 201, and converts the measured or detected information to an electronic signal. The sensor module 240 may include, for example, at least one of a gesture sensor 240A, a gyro sensor 240B, an atmospheric pressure (barometric) sensor 240C, a magnetic sensor 240D, an acceleration sensor 240E, a grip sensor 240F, a proximity sensor 240G, a color sensor 240H (for example, Red, Green, and Blue or "RGB" sensor), a biometric sensor 240I, a temperature/humidity sensor 240J, an illumination (light) sensor 240K, and a Ultra Violet (UV) sensor 240M. Additionally or alternatively, the sensor module 240 may include, for example, a E-nose sensor, an electromyography (EMG) sensor, an electroencephalogram (EEG) sensor, an electrocardiogram (ECG) sensor, an InfraRed (IR) sensor, an iris sensor, a fingerprint sensor (not illustrated), and the like. The sensor module 240 may further include a control circuit for controlling one or more sensors included in the sensor module 240.

The input device 250 includes a touch panel 252, a (digital) pen sensor 254, a key 256, and an ultrasonic input device 258. For example, the touch panel 252 may recognize a touch input in at least one type of a capacitive type, a resistive type, an infrared type, and an acoustic wave type. The touch panel 252 may further include a control circuit. In the capacitive type, the touch panel 252 can recognize proximity as well as a direct touch. The touch panel 252 may further include a tactile layer. In this event, the touch panel 252 provides a tactile reaction to the user.

The (digital) pen sensor 254 may be implemented, for example, using a method identical or similar to a method of receiving a touch input of the user, or using a separate recognition sheet. The key 256 may include, for example, a physical button, an optical key, or a key pad. The ultrasonic input device 258 is a device which can detect an acoustic wave by a microphone (for example, microphone 288) of the electronic device 201 through an input generating an ultrasonic signal to identify data and can perform wireless recognition. According to an embodiment, the electronic device 201 receives a user input from an external device (for example, computer or server) connected to the electronic device 201 by using the communication module 220.

The display 260 (for example, display module 160) includes a panel 262, a hologram device 264, and a projector 266. The panel 262 may be, for example, a Liquid Crystal Display (LCD) or an Active Matrix Organic Light Emitting Diode (AM-OLED). The panel 262 may be implemented to be, for example, flexible, transparent, or wearable. The panel 262 may be configured by the touch panel 252 and one module. The hologram device 264 shows a stereoscopic image in the air by using interference of light. The projector 266 projects light on a screen to display an image. For example, the screen may be located inside or outside the electronic device 201. According to an embodiment, the display 260 may further include a control circuit for controlling the panel 262, the hologram device 264, and the projector 266.

The interface 270 includes, for example, a High-Definition Multimedia Interface (HDMI) 272, a Universal Serial Bus (USB) 274, an optical interface 276, and a D-subminiature (D-sub) 278. The interface 270 may be included in, for example, the communication module 170 illustrated in FIG. 1. Additionally or alternatively, the interface 290 may include, for example, a Mobile High-definition Link (MHL) interface, a Secure Digital (SD) card/Multi-Media Card (MMC), or an Infrared Data Association (IrDA) standard interface.

The audio module 280 bi-directionally converts a sound and an electronic signal. At least some components of the audio module 280 may be included in, for example, the user input module 150 illustrated in FIG. 1. The audio module 280 processes sound information input or output through, for example, a speaker 282, a receiver 284, an earphone 286, the microphone 288 or the like.

The camera module 291 is a device which can photograph a still image and a video. According to an embodiment, the camera module 291 may include one or more image sensors (for example, a front sensor or a back sensor), an Image Signal Processor (ISP) (not shown) or a flash (such as, for example, an LED or xenon lamp).

The power managing module 295 manages power of the electronic device 201. Although not illustrated, the power managing module 295 may include, for example, a Power Management Integrated Circuit (PMIC), a charger Integrated Circuit (IC), or a battery or fuel gauge.

The PMIC may be mounted to, for example, an integrated circuit or an SoC semiconductor. A charging method may be divided into wired and wireless methods. The charger IC charges a battery and prevent over voltage or over current from flowing from a charger. According to an embodiment, the charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier or the like may be added.

The battery fuel gauge measures, for example, a remaining quantity of the battery 296, or a voltage, a current, or a temperature during charging. The battery 296 may store or generate electricity and supply power to the electronic device 201 by using the stored or generated electricity. The battery 296 may include a rechargeable battery or a solar battery. The indicator 297 shows particular statuses of the electronic device 201 or a part (for example, AP 210) of the electronic device 200, for example, a booting status, a message status, a charging status and the like. The motor 298 converts an electrical signal to a mechanical vibration.

Although not illustrated, the electronic device 201 may include a processing unit (for example, GPU) for supporting a module TV. The processing unit for supporting the mobile TV may process, for example, media data according to a standard of Digital Multimedia Broadcasting (DMB), Digital Video Broadcasting (DVB), media flow or the like.

Each of the components of the electronic device according to various embodiments of the present disclosure may be implemented by one or more components and the name of the corresponding component may vary depending on a type of the electronic device. The electronic device according to various embodiments of the present disclosure may include at least one of the above described components, a few of the components may be omitted, or additional components may be further included. Also, some of the components of the electronic device according to various embodiments of the present disclosure may be combined to form a single entity, and thus may equivalently execute functions of the corresponding components before being combined.

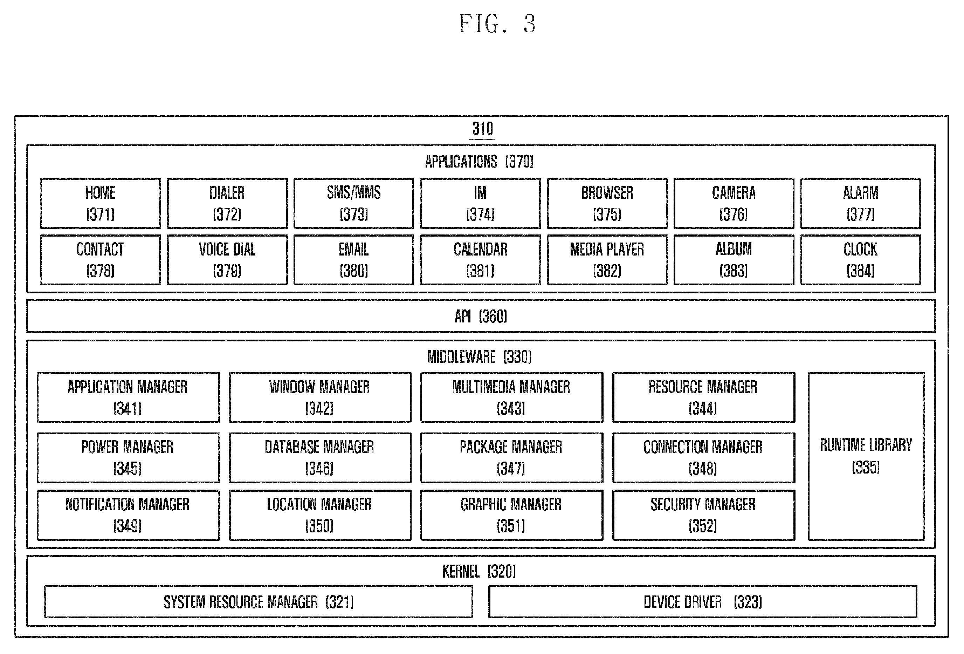

FIG. 3 is a block diagram of a programming module 310 according to an embodiment. The programming module 310 (for example, programming module 140) may be included (e.g., stored) in the electronic device 100 (for example, memory 130) illustrated in FIG. 1. At least some of the programming module 310 may be formed of software, firmware, hardware, or a combination of at least two of software, firmware, and hardware. The programming module 310 may be executed in the hardware (for example, electronic device 201) to include an Operating System (OS) controlling resources related to the electronic device (for example, electronic device 100) or various applications (for example, applications 370) driving on the OS. For example, the OS may be Android, iOS, Windows, Symbian, Tizen, Bada or the like. Referring to FIG. 3, the programming module 310 includes a kernel 320, a middleware 330, an Application Programming Interface (API) 360, and applications 370.

The kernel 320 (for example, kernel 141) includes a system resource manager 321 and a device driver 323. The system resource manager 321 may include, for example, a process manager, a memory manager, and a file system manager. The system resource manager 321 performs a system resource control, allocation, and recall. The device driver 323 may include, for example, a display driver, a camera driver, a Bluetooth driver, a shared memory driver, a USB driver, a keypad driver, a WiFi driver, and an audio driver. Further, according to an embodiment, the device driver 323 may include an Inter-Process Communication (IPC) driver. The middleware 330 includes a plurality of modules prepared in advance to provide a function utilized in common by the applications 370. Further, the middleware 330 provides a function through the API 360 to allow the application 370 to efficiently use limited system resources within the electronic device. For example, as illustrated in FIG. 3, the middleware 330 (for example, middleware 143) includes at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, and a security manager 352.The runtime library 335 includes, for example, a library module used by a complier to add a new function through a programming language while the application 370 is executed. According to an embodiment, the runtime library 335 executes input and output, management of a memory, a function associated with an arithmetic function and the like. The application manager 341 manages, for example, a life cycle of at least one of the applications 370. The window manager 342 manages GUI resources used on the screen. The multimedia manager 343 detects a format utilized for reproducing various media files and performs an encoding or a decoding of a media file by using a codec suitable for the corresponding format. The resource manager 344 manages resources such as a source code, a memory, or a storage space of at least one of the applications 370.

The power manager 345 operates together with a Basic Input/Output System (BIOS) to manage a battery or power and provides power information utilized for the operation. The database manager 346 manages generation, search, and change of a database to be used by at least one of the applications 370. The package manager 347 manages an installation or an update of an application distributed in a form of a package file.

The connection manager 348 manages, for example, a wireless connection such as WiFi or Bluetooth. The notification manager 349 displays or notifies a user of an event such as an arrival message, an appointment, a proximity alarm or the like, in a manner that does not disturb the user. The location manager 350 manages location information of the electronic device. The graphic manager 351 manages a graphic effect provided to the user or a user interface related to the graphic effect. The security manager 352 provides a general security function utilized for a system security or a user authentication. According to an embodiment, when the electronic device (for example, electronic device 101 or 201) has a call function, the middleware 330 may further include a telephony manager for managing a voice of the electronic device or a video call function. The middleware 330 may generate a new middleware module through a combination of various functions of the aforementioned internal component modules and use the generated new middleware module. The middleware 330 may provide a module specified for each type of operating system to provide a differentiated function. Further, the middleware 330 may dynamically delete some of the conventional components or add new components. Accordingly, some of the components described in the embodiment of the present disclosure may be omitted, replaced with other components having different names but performing similar functions, or other components may be further included.

The API 360 (for example, API 145) is a set of API programming functions, and may be provided with a different configuration according to an operating system. For example, in Android or iOS, a single API set may be provided for each platform. In Tizen, two or more API sets may be provided. The applications 370, which may include an application similar to the application 134, may include, for example, a preloaded application and/or a third party application. The applications 370 may include a home application 371 a dialer application 372, a Short Messaging Service (SMS)/Multimedia Messaging Service (MMS) application 373, an Instant Messaging (IM) application 374, a browser application 375, a camera application 376, an alarm application 377, a contact application 378, a voice dial application 379, an email application 380, a calendar application 381, a media player application 382, an album application 383, and a clock application 384. However, the present embodiment is not limited thereto, and the applications 370 may include any other similar and/or suitable application. At least a part of the programming module 310 can be implemented by commands stored in computer-readable storage media. When the commands are executed by at least one processor, e.g. the AP 210, at least one processor can perform functions corresponding to the commands. The computer-readable storage media may be, for example, the memory 230. At least a part of the programming module 310 can be implemented, e.g. executed, by, for example, the AP 210. At least a part of the programming module 310 may include, for example, a module, a program, a routine, a set of instructions and/or a process for performing at least one function.

The titles of the aforementioned elements of the programming module, e.g. the programming module 300, according to the present disclosure may vary depending on the type of the OS. The programming module according to the present disclosure may include at least one of the aforementioned elements and/or may further include other additional elements, and/or some of the aforementioned elements may be omitted. The operations performed by a programming module and/or other elements according to the present disclosure may be processed through a sequential, parallel, repetitive, and/or heuristic method, and some of the operations may be omitted and/or other operations may be added.

The device management application is capable of performing the management (e.g., installation, deletion, or update) of: at least one function of an external electronic device communicating with the electronic device; applications running on the external electronic device; services provided by the external electronic device; etc. Examples of the external electronic device are electronic devices 102 and 104. Examples of the function are a function of turning-on/-off the external electronic device (or part of the components), a function of adjusting the brightness (or resolution) of the display), etc. Examples of the services are a call service, a text message service, etc.

In an embodiment, the application 370 may include applications (e.g., a health care application of a mobile medical device, etc.) set according to attributes of an external electronic device (e.g., electronic devices 102 and 104). In an embodiment, the application 370 may include applications received from an external electronic device (e.g., a server 106, electronic devices 102 and 104, etc.). In an embodiment, the application 370 may include a third party application which can be downloaded from a server or a preloaded application. It should be understood that the names of the components in the program module 310 may vary according to types of operating systems.

In various embodiments, at least part of the program module 310 may be implemented with software, firmware, hardware, or any combination thereof. In addition, at least part of the program module 310 may be implemented (or executed) with a processor (e.g., application processor 210). At least part of the program module 310 may include modules, programs, routines, sets of instructions or processes, etc., in order to perform one or more functions.

In various embodiments, an electronic device 101 (e.g., a mobile electronic device) includes a memory 130 for storing first and second identifiers corresponding to first and second pages respectively, which are supported by applications; a communication interface 170 which may implement a wireless connection 164; and a processor 120. The processor 120: executes the application; identifies a target page to be displayed on a display 160 functionally connected to the mobile electronic device, from among the first and second pages; transmits a target identifier corresponding to the target page from among the first and second identifiers, to an external electronic device, via a network 162; receives notification information corresponding to the target identifier from the external electronic device; and displays at least part of the notification information and the target page, at least simultaneously.

In various embodiments, the mobile electronic device 101 is capable of including tag information, included in the first and second pages, in the first and second identifiers, respectively.

In various embodiments, the mobile electronic device 101 is capable of including the same tag information in the first and second identifiers.

In various embodiments, the processor 120 transmits a target identifier in response to the display of the target page.

In various embodiments, the notification information includes a plurality of notification information, and the processor 120 displays the plurality of notification information as one notification information.

In various embodiments, the processor 120 is capable of displaying the notification information, based on condition information related to the application or the mobile electronic device 101.

In various embodiments, the mobile electronic device 101 is capable of including, in the condition information, a location of the mobile electronic device 101, a priority of card information included in the application, the use number of the card information, or a combination thereof.

In various embodiments, an electronic device (e.g., electronic devices 102, 104, and 106) includes a memory for storing first and second identifiers corresponding to first and second pages respectively; and a processor. The processor: receives at least one target identifier corresponding to a target page of the first and second pages, which needs to be displayed on an external electronic device, from the external electronic device via a network; identifies notification information corresponding to at least one target identifier; and transmits the notification information to the external electronic device via the network.

In various embodiments, the processor is capable of identifying condition information related to the target identifier; and determining the priority of the notification information, based on the condition information.

In various embodiments, the processor is capable of including information regarding the priority of the notification information in the notification information, and transmitting the notification information.

In various embodiments, the processor is capable of: receiving at least one or more tagging information from the external electronic device; searching for the notification information associated with at least one or more tagging information; and transmitting the notification information to the external electronic device, based on at least one or more tagging information.

In various embodiments, the processor is capable of: receiving at least one or more screen ID information from the external electronic device; searching for notification information associated with at least one or more screen ID information; and transmitting the notification information to the external electronic device, based on at least one or more ID information.

In various embodiments, at least one or more tagging information are: created based on a rule made with the external electronic device. The processor is capable of storing the rule in the electronic device, before receiving at least one or more tagging information from the external electronic device.

In various embodiments, the electronic device 101 includes: a memory 130 for storing first and second identifiers corresponding to first and second pages respectively, which are supported by applications; a communication interface 170; and a processor 120. The processor 120: receives at least one notification information corresponding to the application from an external electronic device via the communication interface 170; identifies a target page corresponding to at least one notification information from among the first and second pages, based on the identifier; and displays at least one notification information, associated with the target page.

In various embodiments, the processor 120 refrains from displaying (e.g., does not display) at least one notification information, associated with other pages except for the target page from among the first page and the second page.

In various embodiments, the notification information includes the priority related to the notification information. The processor 120 alters a condition as to whether to display at least one notification information or the target page, the order of display, the time of display, and the content of display, based on the priority.

In various embodiments, the processor 120 receives at least one notification information from the external electronic devices 102, 103 and 106, based on the display of the target page.

In various embodiments, the processor 120 transmits the identifier corresponding to the target page to the external electronic devices 102, 104, and 106. In various embodiments, the processor 120 displays, on the display 160, the target page and at least one notification information associated with the target page, at least simultaneously. Alternatively, the processor may include at least one notification information in another page (e.g., at least one of the multi-windows) except for the target page. For example, the processor may display at least one notification information on a screen that performs functions, separated from the target page.

In various embodiments, the processor receives at least one notification information from the external electronic devices 102, 104 and 106, in response to the execution of the application.

In various embodiments, the processor 120 is capable of receiving periodically notification information (or other announcements) from external electronic devices 102, 104, and 106, as a background operation, before the application is executed (apparently).

In various embodiments, the processor 120 is capable of receiving periodically notification information (or other announcements) from external electronic devices 102, 104, and 106, while the application is being executed in the background.

In various embodiments, an apparatus includes: a display 160; a memory 130; a communication interface 170; and a processor 120. The processor 120 controls: the communication interface 170 to transmit at least one or more tagging information to a server 106 and to receive notification information from the server 106, based on at least one or more tagging information; and the display 160 to display the received notification information, based on at least one or more tagging information.

In various embodiments, the tagging information is mapped to all screen IDs in the application flow.

In various embodiments, the processor 120 determines, when the application is executed, whether a specific screen in the application is activated.

In various embodiments, the processor 120 ascertains that a specific screen is activated and controls the communication interface 170 to transmit at least one or more tagging information to a server 106.

In various embodiments, the processor 120 creates at least one or more tagging information, based on a rule made with the server 106.

In various embodiments, the processor 120 controls: the communication interface 170 to transmit at least one or more screen ID information to the server 106 and to receive the notification information from the server 106, based on at least one or more screen ID information; and the display 160 to display the received notification information, based on at least one or more screen ID information.

In various embodiments, the processor 120: determines, when the application is executed, whether a specific screen in the application is activated; and control, when a specific screen is activated, the communication interface 170 to transmit at least one or more screen ID information to a server 106.

In various embodiments, the processor 120 controls the communication interface 170 to: receive at least one or more tagging information from an electronic device 101; search for notification information associated with at least one or more tagging information; and transmit the notification information to the electronic device 101, based on at least one or more tagging information.

In various embodiments, the processor 120 controls the communication interface 170 to: receive at least one or more screen ID information from the electronic device 101; search for notification information associated with at least one or more screen ID information; and transmit the notification information to the electronic device 101, based on at least one or more ID information.

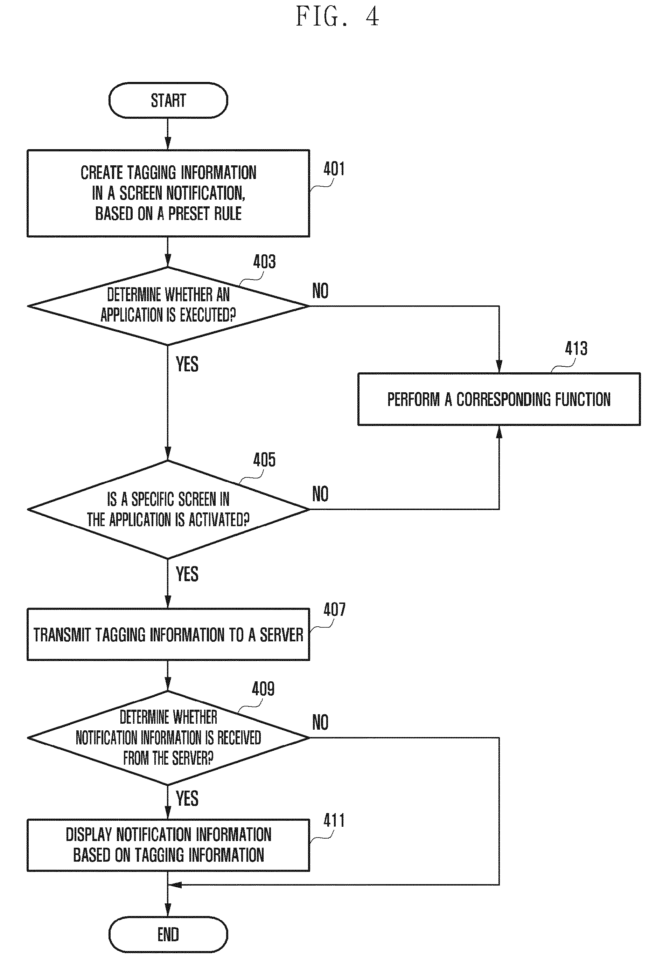

FIG. 4 is a flowchart illustrating a method in an electronic device 101 providing information, based on tagging information, according to various embodiments of the present disclosure.

The electronic device 101 may create tagging information in or for a notification screen of an application based on a preset rule, according to commands (e.g., control) of the processor 120 in operation 401.

In various embodiments, the electronic device 101 (e.g., processor 120) has a rule pre-contracted or pre-confirmed with an external electronic device (e.g., server 106) for a particular screen of an application utilized for notifications, such as a user guide, a user agreement or terms of use, etc. The rule may be expressed with tagging information (e.g., a tag value). The rule may be, for example, a serial number, an abbreviation, and/or a combined keyword.

In various embodiments, the electronic device 101 (e.g., processor 120) may previously intercommunicate tagging information (e.g., a tag value) identifying a particular screen (also called a screen ID) during application flow with the server 106.

In various embodiments, the server 106 may analyze log information transmitted from the electronic device 101 (e.g., processor 120) and define dynamic tagging information (e.g., a tag value).

In various embodiments, the electronic device 101 (e.g., processor 120) may perform application programming interface (API) communication with the server 106, via communication interface 170 functionally connected to the electronic device 101, for all the processes in the application flow, and insert tags into the API parameters transmitted through the API communication.

In various embodiments, the electronic device 101 (e.g., processor 120) may create tagging information using a variety of methods, based on a rule confirmed with the server 106. For example, a tag value may be mapped to a screen ID in the application flow in the electronic device 101 (e.g., processor 120), in 1:1, n:1 or 1:n, where n is positive integers greater than or equal to 2. In various embodiments, the server 106 may analyze log information transmitted from the electronic device 101, and dynamically map a tag value to a specific screen, in 1:1, n:1 or 1:n, where n is positive integers greater than or equal to 2.

The electronic device 101 (e.g., processor 120) may determine whether an application is executed according to a command (e.g., control) of the processor 120 in operation 403.

In various embodiments, the electronic device 101 (e.g., processor 120) may execute the application, based on inputs (e.g., a message, a command, etc.) received from an external electronic device or from user inputs (e.g., a touch, a double touch, a long press, a touch and move to right/left, a gesture, a drag and drop, etc.). Examples of the external electronic device are first 102 and second 104 external electronic devices and a server 106 shown in FIG. 1.

When the application is not executed in operation 403, the electronic device 101 (e.g., processor 120) continues performing a corresponding function in operation 413.

On the other hand, when the application is executed in operation 403, the electronic device 101 (e.g., processor 120) determines whether a specific screen in the application is activated, according to a command (e.g., control) of the processor 120 in operation 405.

When it is determined that a specific screen in the application is not activated in operation 405, the electronic device 101 (e.g., processor 120) proceeds with operation 413 and continues performing a corresponding function.

On the other hand, when a specific screen in the application is activated in operation 405, then the electronic device 101 (e.g., processor 120) may transmit tagging information identifying the specific screen to a server 106 via the communication interface 170 according to a command (e.g., control) of the processor 120 in operation 407.

Subsequently, the electronic device 101 (e.g., processor 120) may determine whether notification information is received from the server 106 via the communication interface 170 according to a command (e.g., control) of the processor 120 in operation 409.

When the electronic device 101 has received notification information from the server 106 in operation 409, it may control the display 160 to display the received notification information based on the tagging information, according to a command (e.g., control) of the processor 120 in operation 411.

On the other hand, when the electronic device 101 has not received notification information from the server 106 in operation 409, then in one embodiment (not depicted in FIG. 4), it may control the display 160 to display the activated, specific screen thereon.

In various embodiments, notification information may be displayed on the display 160, based on tagging information. In this case, the notification information may be displayed, overlapping with a specific screen. In various embodiments, the notification information may overlap, in popup window form, with a specific screen, on the display 160. In various embodiments, notification information may be displayed on the display 160, based on screen ID information. In this case, the notification information may create pages according to notification information, and the pages are displayed on the display 160.

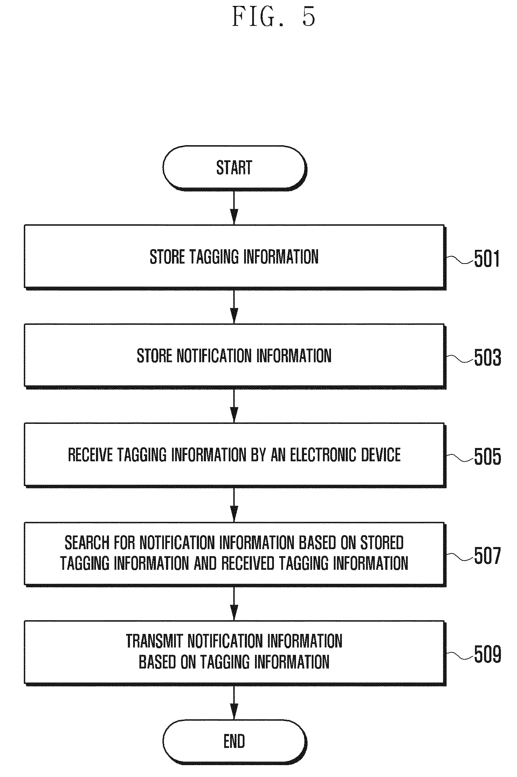

FIG. 5 is a flowchart that describes a method for a server 106 to provide information to an electronic device 101, based on tagging information, according to various embodiments of the present disclosure.

In various embodiments, the server 106 may include a processor, a memory, an input-output interface, a display, and a communication interface, such as those of the electronic device 101 illustrated in FIG. 1 or the electronic device 201 shown in FIG. 2.

The server 106 may create (or generate) tagging information for notification screens of one or more application based on a rule confirmed with an electronic device 101, and then store the created tagging information in memory, according to commands (e.g., control) of the processor in operation 501.

In various embodiments, the server 106 may utilize a rule confirmed with an electronic device 101 for particular screens of an application associated with certain notifications, such as user guides, instructions, user agreements or contracts, etc. The rule may be expressed with tagging information (e.g., a tag value). The rule may be, for example, a serial number, an abbreviation, and/or a combined keyword.

In various embodiments, the server 106 may previously intercommunicate tagging information (e.g., a tag value) regarding all the screen identifications (also called screen IDs) in the application flow with the electronic device 101 (e.g., a terminal 101).

In various embodiments, the server 106 may analyze log information transmitted from the electronic device 101, and defining dynamic tagging information (e.g., a tag value).

The server 106 may generate tagging information, in a variety of methods, based on a rule made with the electronic device 101. In various embodiments, a tag value may be mapped to all screen IDs in the application flow in the electronic device 101, in 1:1, n:1 or 1:n, where n is positive integers greater than or equal to 2. In various embodiments, the server 106 may analyze log information transmitted from the electronic device 101, and dynamically map a tag value to a specific screen, in 1:1, n:1 or 1:n, where n is positive integers greater than or equal to 2.

In various embodiments, the server 106 may store tagging information in the memory, in a table form, or a database, e.g., as in the following table 1.

**[Table 1]**

| Tagging information | Screen ID | Published Content |
|---|---|---|
| A1 | 001 | Content 1 |
| A1 | 002 | Content 1 |
| A1 | 003 | Content 1 |
| B1 | 004 | Content 2 |
| C1 | 004 | Content 3 |

In various embodiments, one item of notification information (e.g., published content) is mapped to one item of tagging information, in 1:1. The mapped tagging information is stored in a database in table form in the memory or the server 106. For example, as described in table 1, when tagging information is 'A1,' the published content is 'content 1.' In this case, 'A1' is mapped to 'Content 1' in 1:1. The tagging information, 'A1,' is mapped to screen IDs, '001', '002', and '003,' in 1:n (n is positive integers greater than or equal to 2). For different screens, with screen IDs '001', '002' and '003,' according to the tagging information 'A1,' the same published content (e.g., 'content 1') is transmitted from the server 106 to the electronic device 101. The electronic device 101 is capable of displaying published content according to tagging information. For example, for different screens with screen IDs '001', '002' and '003,' the electronic device 101 is capable of displaying the same published content (e.g., 'content 1') on the display 160, according to the tagging information 'A1.'

In various embodiments, one screen ID is mapped to tagging information in 1:n (n is positive integers greater than or equal to 2). For example, as described in table 1, when a screen ID is '004,' it may be associated with at least one or more tagging information 'B1,' and 'C1.' For screen ID '004' corresponding to tagging information 'B1' and 'C1,' different published content (e.g., 'content 2' and 'content 3') is transmitted from the server 106 to the electronic device 101. The electronic device 101 is capable of displaying published content according to tagging information. For example, for one screen with screen ID '004,' the electronic device 101 may display different published content (e.g., 'content 2' and 'content 3'), according to tagging information 'B1' and 'C1,' on the display 160, simultaneously or at different timings.

The server 106 may store notification information in the memory, according to a command (e.g., control) of the processor, in operation 503. The notification information may be generation by, for example, inputs received from a service operator. The notification information may include notification content regarding a specific screen (e.g., published content or the valid publishing period). The notification information may be stored in association with tagging information.

The server 106 may receive tagging information regarding one or more notification screens of an application executing on the electronic device 101, from the electronic device 101 via the communication interface, according to a command (e.g., control) of the processor in operation 505.

The server 106 may search for mapped notification, based on the tagging information received from the electronic device 101 and tagging information stored the server 106, according to a command (e.g., control) of the processor, in operation 507.

In various embodiments, the server 106 may search for tagging information stored in its memory that matches the tagging information received from the electronic device 101, according to a command (e.g., control) of the processor, in operation 507. When the server 106 has detected tagging information in memory matching the tagging information received from the electronic device 101, the server 106 may search for notification information associated with the stored tagging information.

The server 106 may transmit the notification information to the electronic device 101, based on the tagging information, according to a command (e.g., control) of the processor, in operation 509.

In various embodiments, the server 106 may transmit, to the electronic device 101, the notification information that corresponds to the stored tagging information detected during the search as matching the received tagging information, according to a command (e.g., control) of the processor, in operation 509.

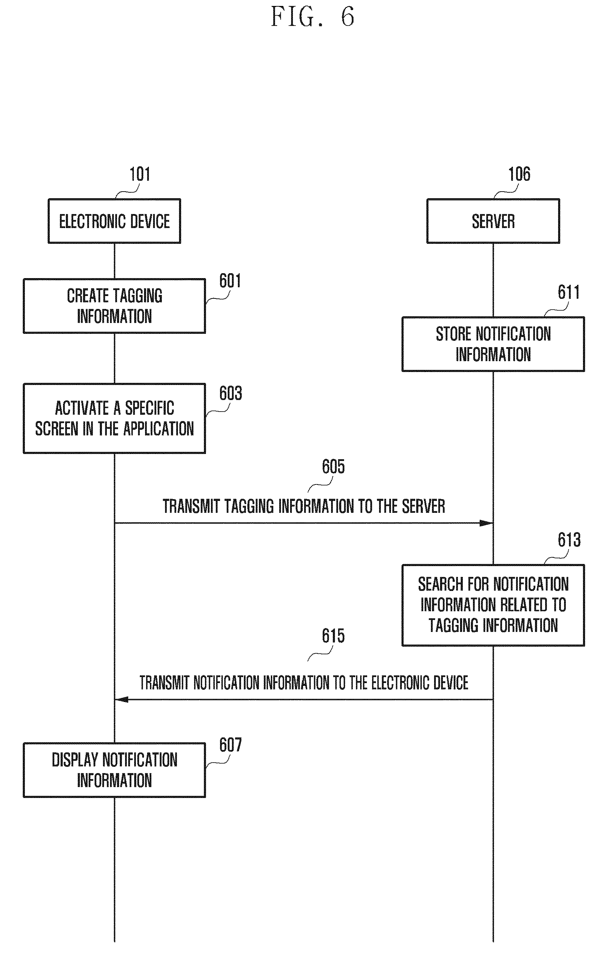

FIG. 6 is a flowchart that describes a method of providing information between an electronic device 101 and a server 106, based on tagging information, according to various embodiments of the present disclosure.

In various embodiments, the server 106 may include a processor, a memory, an input-output interface, a display, and a communication interface, which are identical or similar to those of the electronic device 101 shown in FIG. 1 or the electronic device 201 shown in FIG. 2.

The electronic device 101 may create tagging information in a notification screen of one or more applications. The tagging information may be created based on a preset rule confirmed or executed in conjunction with the server 106, according to commands (e.g., control) of the processor 120 in operation 601.

The electronic device 101 (e.g., processor 120) may activate a specific screen in a particular application in operation 603.

When a specific screen in the application is activated in operation 603, the electronic device 101 (e.g., processor 120) may transmit the appropriate tagging information to the server 106 via the communication interface 170, according to a command (e.g., control) of the processor 120, in operation 605.

Turning to the operations of the server 106, the server 106 may store notification information in its memory, according to a command (e.g., control) of the processor, in operation 611.

In various embodiments, the server 106 may also store tagging information in the memory in operation 611.

When the electronic device 101 transmits tagging information to the server 106 in operation 605, the server 106 may receive the transmitted tagging information via the communication interface

The server 106 may executed a search for stored notification information related to or corresponding to the tagging information received from the electronic device 101 in operation 613.

Once the related/corresponding tagging information has been detected and retrieved, the server 106 may transmit the detected matching notification information to the electronic device 101 via the communication interface, according to a command (e.g., control) of the processor, in operation 615.

The electronic device 101 may control the display 160 to display the notification information received from the server 106, in which the notification information received from the server is related to the tagging information previously transmitted to the server 106, according to a command (e.g., control) of the processor 120, in operation 607.

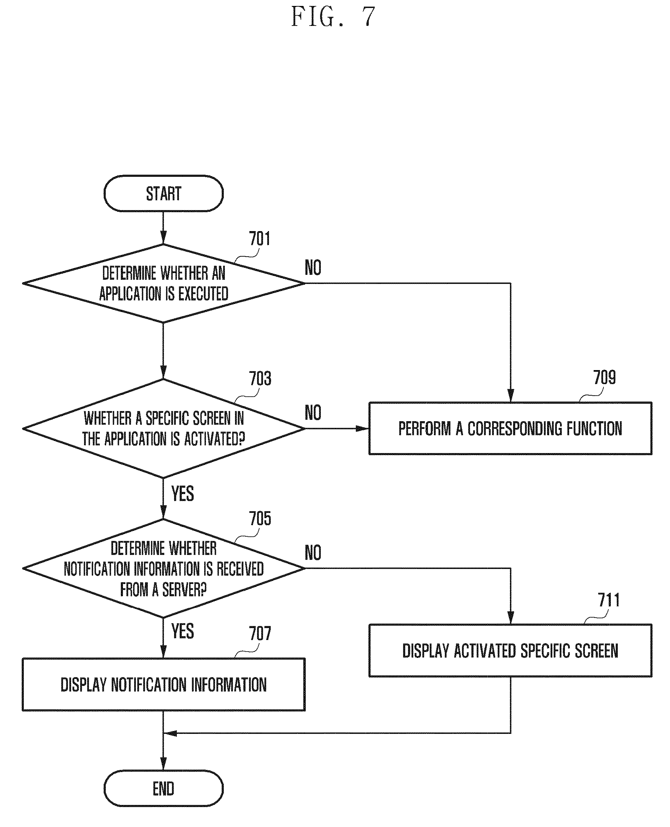

FIG. 7 is a flowchart that describes a method for an electronic device 101 to provide information, based on screen identification (ID) information, according to various embodiments of the present disclosure.

The electronic device 101 (e.g., processor 120) may determine whether an application is executed according to a command (e.g., control) of the processor 120 in operation 701.

When the application is not executed in operation 701, the electronic device 101 (e.g., processor 120) may continue performing a corresponding function in operation 709.

On the other hand, when the application is executed in operation 701, the electronic device 101 (e.g., processor 120) may detect whether a specific screen in the application is activated according to a command (e.g., control) of the processor 120 in operation 703.

When a specific screen in the application is not activated in operation 703, the electronic device 101 may proceed with operation 709 and continue performing a corresponding function.

On the other hand, when a specific screen in the application is activated in operation 703, the electronic device 101 (e.g., processor 120) may determine whether it receives notification information from the server 106 via the communication interface 170 according to a command (e.g., control) of the processor 120 in operation 705.

When the electronic device 101 has received notification information from the server 106 in operation 705, the electronic device 101 may control the display 160 to display the received notification information based on a screen ID according to a command (e.g., control) of the processor 120 in operation 707.

On the other hand, when the electronic device 101 has not received notification information from the server 106 in operation 705, it is capable of controlling the display 160 to display the activated, specific screen thereon in operation 711.

In various embodiments, notification information may be displayed on the display 160, based on screen ID information. In this case, the notification information may be displayed, overlapping a specific screen of the application. For example, in various embodiments, the specific screen may be displayed in the form of a popup window. In various embodiments, notification information may be displayed on the display 160, based on screen ID information. In this case, the notification information may be created according to notification information (screen ID information) and displayed on the display 160. In various embodiments, notification information, displayed on the display 160 based on screen ID information, may all be displayed in one pop-up window.

FIG. 8 is a flowchart that describes a method for a server 106 to provide information to an electronic device 101, based on screen ID information, according to various embodiments of the present disclosure.

In various embodiments, the server 106 may include a processor, a memory, an input-output interface, a display, and a communication interface, which are identical or similar to those of the electronic device 101 shown in FIG. 1 or the electronic device 201 shown in FIG. 2.

The server 106 is capable of storing screen ID information for one or more applications in the memory, according to commands (e.g., control) of the processor in operation 801. In various embodiments, the server 106 may obtain information regarding screen IDs for every screen in the application flow. This information may be obtained and stored, for example, when the application is issued (e.g., published, installed, etc.) In various embodiments, the server 106 may analyze log information transmitted from the electronic device 101 and extract the relevant screen IDs.

The server 106 may store notification information in the memory, according to a command (e.g., control) of the processor, in operation 803. The notification information may be created by the inputs of a service operator. The notification information may include notification content regarding a specific screen (e.g., published content or the valid publishing period). The notification information may be stored in association with tagging information.

The server 106 may receive screen ID information regarding the application executing on the electronic device 101 from the electronic device 101 via the communication interface according to a command (e.g., control) of the processor in operation 805.

The server 106 may search for mapped notification information, based on the screen ID information received from the electronic device 101 and screen ID information stored the server 106, according to a command (e.g., control) of the processor, in operation 807.

In various embodiments, the server 106 may search for screen ID information stored in its memory that matches with screen ID information received from the electronic device 101, according to a command (e.g., control) of the processor, in operation 807. When the server 106 detected screen ID information in its memory that matches with screen ID information received from the electronic device 101, the server 106 may search for and retrieve notification information associated with the detected screen ID information.

The server 106 may transmit the notification information to the electronic device 101 based on the screen ID information, according to a command (e.g., control) of the processor, in operation 809.

In various embodiments, the server 106 may transmit, to the electronic device 101, the notification information, searched based on the stored screen ID information matching with the received screen ID information, according to a command (e.g., control) of the processor, in operation 809.

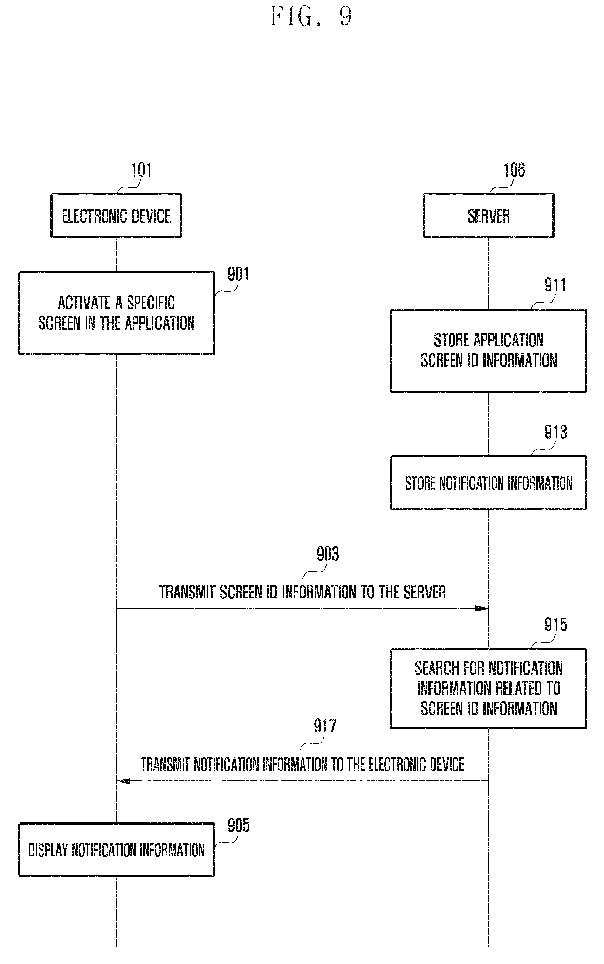

FIG. 9 is a flowchart that describes a method of providing information between an electronic device 101 and a server 106, based on screen ID information, according to various embodiments of the present disclosure.

In various embodiments, the server 106 is capable of including a processor, a memory, an input-output interface, a display, and a communication interface, which are identical or similar to those of the electronic device 101 shown in FIG. 1 or the electronic device 201 shown in FIG. 2.

The electronic device 101 may activate a specific screen in the application in operation 901.

When a specific screen in the application is activated in operation 901, the electronic device 101 (e.g., processor 120) may transmit screen ID information to the server 106 via the communication interface 170, according to a command (e.g., control) of the processor 120, in operation 903. The transmitted screen ID information may be related to the specific screen of an application executing in the electronic device 101.

The server 106 may store application screen ID information in its memory, according to a command (e.g., control) of the processor, in operation 911.

The server 106 may store notification information in its memory, according to a command (e.g., control) of the processor, in operation 913.

When the electronic device 101 transmits screen ID information to the server 106 in operation 903, the server 106 may receive the transmitted screen ID information via the communication interface in operation 903.

The server 106 may search for notification information related to the screen ID information received from the electronic device 101 in operation 915.

After the corresponding notification information has been detected via the search, the server 106 may transmit the detected notification information to the electronic device 101 via the communication interface, according to a command (e.g., control) of the processor, in operation 917.

The electronic device 101 may control the display 160 to display the notification information, received from the server 106, based on the screen ID information, according to a command (e.g., control) of the processor 120, in operation 905.

The operations (e.g., 401 to 413, 501 to 509, 601 to 615, 701 to 709, 801 to 809, and 901 to 917) performed by the methods referring to FIGs. 4 to 9 may be executed in serial, parallel, repetitive or heuristic fashion. For example, part of the operations can be executed in any other order, skipped, or executed with additional operations.

In various embodiments of the present disclosure, a method of providing information in a mobile electronic device (e.g., electronic device 101) includes: executing an application for supporting a plurality of pages including first and second pages which correspond to first and second identifiers respectively, in the mobile electronic device 101, identifying a target page to be displayed on a display 160 functionally connected to the mobile electronic device, from among the first and second pages, transmitting a target identifier corresponding to the target page from among the first and second identifiers, to an external electronic device, via a network 162, receiving notification information corresponding to the target identifier from the external electronic device, and displaying at least part of the notification information and the target page, at least simultaneously.

In various embodiments, the first and second identifiers include tag information included in the first and second pages, respectively.

In various embodiments, the first and second identifiers include the same tag information.

In various embodiments, the method performs the transmission of a target identifier in response to the display of the target page.

In various embodiments, the notification information includes a plurality of notification information. The display of at least part of the notification information and the target page includes displaying the plurality of notification information as one notification information.

In various embodiments, the display of at least part of the notification information and the target page includes displaying the notification information, based on condition information related to the application or the mobile electronic device.

In various embodiments, the condition information includes: a location of the mobile electronic device, a priority of card information included in the application, the use number of the card information, or a combination thereof.

In various embodiments, a method of providing information in an electronic device includes: receiving at least one target identifier corresponding to a target page of first and second pages corresponding to first and second identifiers respectively, which needs to be displayed on an external electronic device, from the external electronic device via a network; identifying notification information corresponding to at least one target identifier; and transmitting the notification information to the external electronic device via the network.

In various embodiments, the identification of notification information includes: identifying condition information related to the target identifier; and determining the priority of the notification information, based on the condition information.

In various embodiments, the transmission of the notification information includes: including information regarding the priority of the notification information in the notification information, and transmitting the notification information.

In various embodiments, a method of providing information in a mobile electronic device (e.g., an electronic device 101) includes: receiving at least one notification information corresponding to an application for supporting a plurality of pages including first and second pages corresponding to first and second identifiers respectively, from external electronic devices 102, 104 and 106, via a communication interface 170 functionally connected to the mobile electronic device 101; identifying a target page from among the first and second pages, which corresponds to at least one notification information, based on the identifier; and displaying at least one notification information in association with the target page.

In various embodiments, the method refrains from displaying (e.g., does not display) at least one notification information, associated with other pages except for displaying the target page from among the first page and the second page.

In various embodiments, the notification information includes the priority related to the notification information. The display of at least one notification information includes altering a condition as to whether to display at least one notification information or the target page, the order of display, the time of display, and the content of display, based on the priority.

In various embodiments, the reception of at least one notification information includes receiving at least one notification information from the external electronic devices, based on the display of the target page.

In various embodiments, the method transmits the identifier corresponding to the target page to the external electronic device, before receiving at least one notification information.

In various embodiments, the reception of at least one notification information includes receiving at least one notification information from the external electronic devices, in response to the execution of the application.

In various embodiments, the display of at least one notification information in association with the target page includes displaying, on the display 160, at least one notification information and the target page, at least simultaneously. Alternatively, the display may include displaying at least one notification information on another page (e.g., at least one of multi-windows) except for the target page. For example, at least one notification information may be displayed on a screen that performs functions, separated from the target page

In various embodiments, the reception may include receiving periodically notification information (or other announcements) from external electronic devices 102, 104, and 106, as a background operation, before the application is executed (apparently).

In various embodiments, the reception may also include receiving periodically notification information (or other announcements) from external electronic devices 102, 104, and 106, while the application is executing on the background.

In various embodiments, a method of providing information in an electronic device includes: transmitting at least one or more tagging information to a server 106; receiving notification information from the server 106, based on at least one or more tagging information; and displaying the received notification information, based on at least one or more tagging information.

In various embodiments, the tagging information is mapped to all screen IDs in the application flow.

In various embodiments, the method further includes: determining whether an application is executed; and determining, when an application is executed, whether a specific screen in the application is activated.

In various embodiments, the transmission of at least one or more tagging information to a server 106 includes transmitting, when the specific screen is activated, at least one or more tagging information to the server 106.

In various embodiments, the method further includes creating at least one or more tagging information based on a rule made with the server 106.

In various embodiments, the method includes: transmitting at least one or more screen ID information to the server 106; receiving notification information from the server 106, based on at least one or more screen ID information; and displaying the received notification information, based on at least one or more screen ID information.

In various embodiments, the method further includes: determining whether an application is executed; determining, when an application is executed, whether a specific screen in the application is activated; and transmitting, when a specific screen is activated, at least one or more screen ID information to the server 106.

In various embodiments, a method of providing information in a server 106 includes: receiving at least one or more tagging information from an electronic device 101; searching for notification information associated with at least one or more tagging information; and transmitting the notification information to the electronic device 101, based on at least one or more tagging information.

In various embodiments, the method includes: receiving at least one or more screen ID information from the electronic device 101; searching for notification information associated with at least one or more screen ID information; and transmitting the notification information to the electronic device 101, based on at least one or more screen ID information.

In various embodiments, at least one or more screen ID information are stored in the server 106 when applications are issued; at least one or more tagging information are created according to a rule made with the electronic device 101, which has been stored before at least one or more tagging information is received from the electronic device 101.

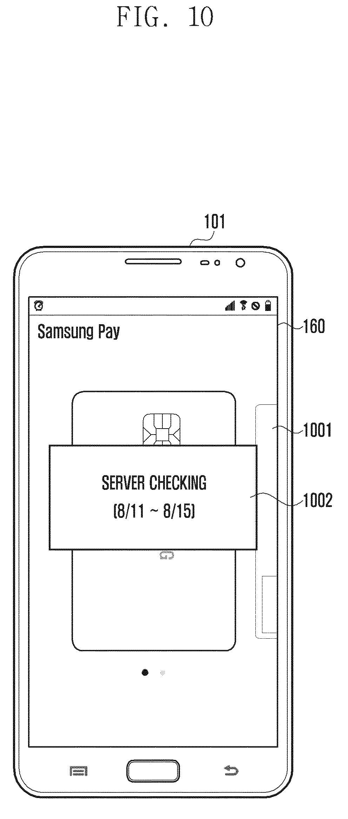

FIG. 10 is a diagram showing a user interface of an electronic device 101 related to an information providing method, according to various embodiments of the present disclosure.

In various embodiments, the electronic device 101 may execute an application (e.g., a payment application). The electronic device 101 may previously intercommunicate tagging information (e.g., a tag value) regarding all screen IDs in the application flow with the server 106. Although the electronic device 101 does not directly communicate tagging information with the server 106, the server 106 may obtain information regarding all screen IDs in the application flow when an application is issued (e.g., published, installed, executed, etc.) and has stored the obtained information.

In various embodiments, when a specific screen 1001 in the application is activated, the electronic device 101 may transmit, to the server 106, tagging information and/or screen ID information regarding the specific screen.

In various embodiments, a tag value may be mapped to all screen IDs in the application flow in the electronic device 101, in 1:1, n:1 or 1:n, where n is positive integers greater than or equal to 2. In various embodiments, the server 106 may analyze log information transmitted from the electronic device 101, and dynamically map a tag value to a specific screen, in 1:1, n:1 or 1:n, where n is positive integers greater than or equal to 2.

In various embodiments, notification information may be mapped to all screen IDs in the application flow in the electronic device 101, in 1:1, n:1 or 1:n, where n is positive integers greater than or equal to 2.

In various embodiments, when the server 106 receives tagging information and/or screen ID information regarding the specific screen from the electronic device 101, it may search for notification information associated with tagging information and/or screen ID information. When the server 106 has detected and retrieved the appropriate notification information, it transmits the detected notification information to the electronic device 101. The electronic device 101 is capable of receiving the notification information and displaying the notification information on the specific screen 1001 in the application, based on the screen ID information and/or tagging information. The electronic device 101 may display notification information 1002 on the display 160, which in this example is displayed overlapping a specific screen 1001. The notification information 1002 may be displayed in popup window format overlapping with a specific screen that is displayed on the display 160 functionally connected to the electronic device 101. Notification content may be information regarding service management, such as a "SERVER CHECKING [8/11 ∼ 8/12]," or other information, such as announcements regarding benefits or events by card-issuing companies, etc.

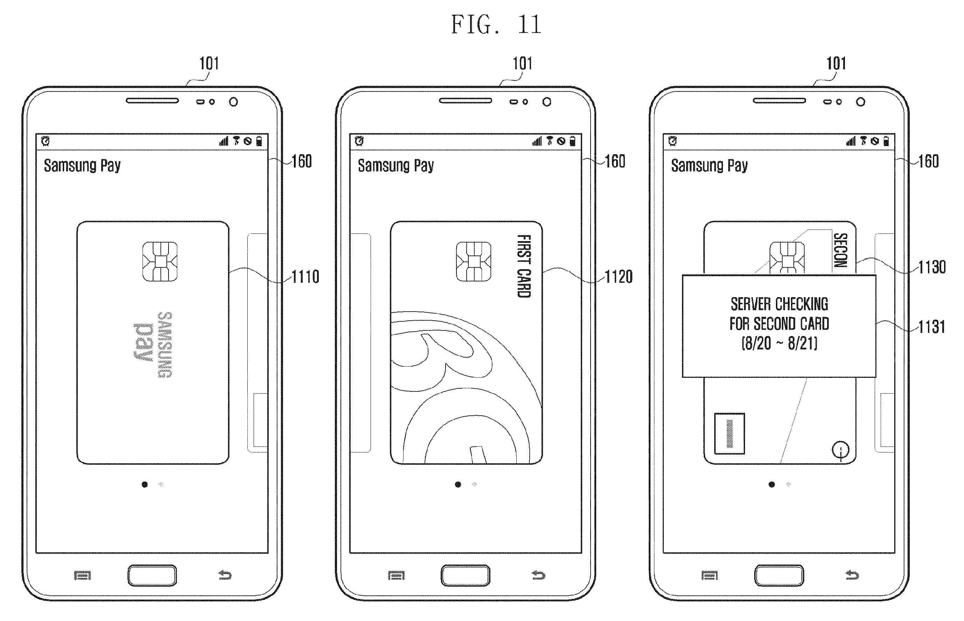

FIG. 11 is a diagram showing a user interface of an electronic device 101 related to an information providing method, according to various embodiments of the present disclosure.

In various embodiments, the electronic device 101 may execute an application (e.g., a payment application). The electronic device 101 may previously communicate tagging information (e.g., a tag value) regarding all screen IDs in the application flow with the server 106. Although the electronic device 101 does not previously directly communicate tagging information with the server 106, the server 106 may obtain information regarding all screen IDs in the application flow when an application is issued and has stored the obtained information.

In various embodiments, when a specific screen 1110, 1120, or 1130 in the application is activated, the electronic device 101 may transmit to the server 106 tagging information and/or screen ID information regarding the specific screens 1110, 1120, and 1130.

In various embodiments, when the server 106 receives tagging information and/or screen ID information regarding the specific screens 1110, 1120, and 1130 from the electronic device 101, it may search for notification information associated with the tagging information and/or screen ID information for the screens 1110, 1120 and 1130. When the server 106 detects the desired notification information, the server 106 may transmit the detected notification information to the electronic device 101.

In various embodiments, the server 106 may not transmit the notification information regarding screens 1110 and 1120 (e.g., among the specific screens 1110, 1120, and 1130), because they do not have notification information associated with the tagging information and/or screen ID information.

In various embodiments, the server 106 may transmit to the electronic device 101 notification information regarding a screen 1130 (e.g., from among the specific screens 1110, 1120, and 1130) because the server detects notification information associated with tagging information and/or screen ID information for the screen 1130.

In various embodiments, the electronic device 101 may receive the notification information and display the notification information on the specific screen 1130 in the application, based on the screen ID information and/or tagging information. The electronic device 101 may display notification information 1131 on the display 160, which in this example is displayed overlapping a specific screen 1130. The notification information 1131 may be displayed, for example, in a popup window format overlapping with a specific screen 1130, on the display 160 of the electronic device 101. Notification content may be information regarding service management, such as a "SERVER CHECKING FOR SECOND CARD [8/20 ∼ 8/21]," etc. In various embodiments, notification information displayed on the display 160 based on screen ID information may create pages according to notification information, so that the pages are displayed on the display 160.

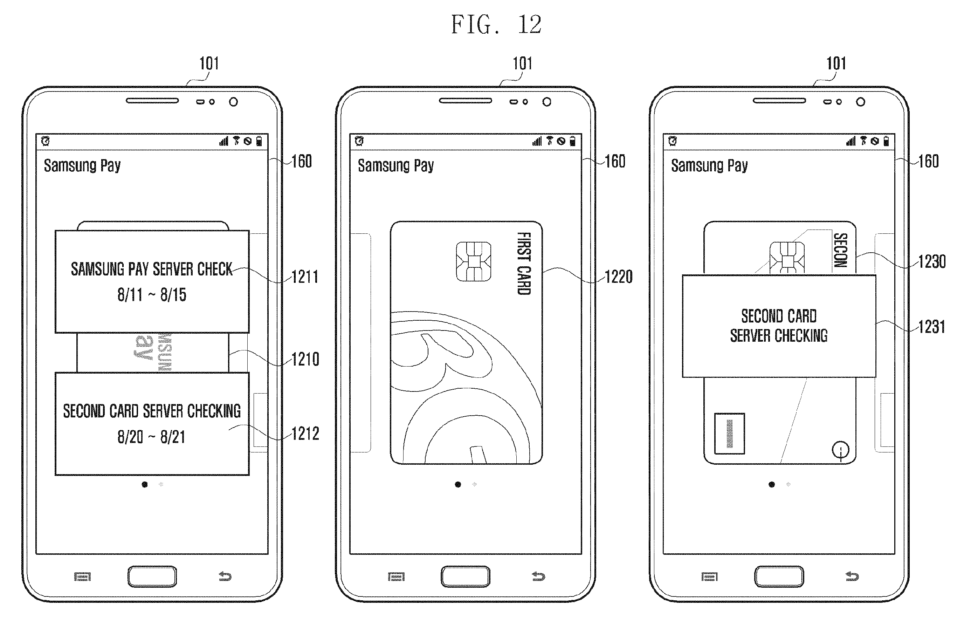

FIG. 12 is a diagram showing a user interface of an electronic device 101 related to an information providing method, according to various embodiments of the present disclosure.

In various embodiments, the electronic device 101 may execute an application (e.g., a payment application). The electronic device 101 may previously communicate tagging information (e.g., a tag value) regarding all screen IDs in the application flow with the server 106. Although the electronic device 101 does not directly discuss tagging information with the server 106, the server 106 may obtain information regarding all screen IDs in the application flow when an application issues and has stored the obtained information.

In various embodiments, when a specific screen 1210, 1220, or 1230 in the application is activated, the electronic device 101 may transmit, to the server 106, tagging information and/or screen ID information regarding the specific screens 1210, 1220, and 1230.

In various embodiments, when the server 106 receives tagging information and/or screen ID information regarding the specific screens 1210, 1220, and 1230 from the electronic device 101, the server 106 may search for notification information associated with tagging information and/or screen ID information. When the server 106 has detected the notification information, the server 106 may transmit the detected notification information to the electronic device 101.

In various embodiments, the server 106 may not transmit, notification information regarding a screen 1220 (e.g., from among the specific screens 1210, 1220, and 1230) to the electronic device 101, because the screen 1220 does not have notification information associated with tagging information and/or screen ID information in the server 106 memory.

In various embodiments, the server 106 may transmit, to the electronic device 101, notification information regarding screens 1210 and 1230 (e.g., from among the specific screens 1210, 1220 and 1230), because screens 1210 and 1230 have notification information associated with tagging information and/or screen ID information.

In various embodiments, the electronic device 101 may receive the notification information and display the notification information on the specific screens 1210 and 1230 in the application, based on the screen ID information and/or tagging information. The electronic device 101 may display notification information 1211, 1212 and/or 1231 on the display 160, overlapping with a specific screen 1230. The notification information 1211, 1212 and 1231 may be displayed in popup window format, disposed overlapping with a specific screen, on the display 160 of the electronic device 101. Notification content may be information regarding service management, such as a "SAMSUNG PAY SERVER CHECK 8/11∼8/12," indicated by reference number 1211, a "SECOND CARD SERVER CHECKING 8/20 ∼ 8/21," indicated by reference number 1212, a "SECOND CARD SERVER CHECKING" indicated by reference number 1231, etc., or announcements regarding benefits or events by card issuing companies, etc. In various embodiments, notification information displayed on the display 160 based on screen ID information may create pages according to notification information, so that the pages are displayed on the display 160.

In various embodiments, when a tag value is mapped to all the screen IDs in the application flow in the electronic device 101, in 1:n, where n is positive integers greater than or equal to 2, or when notification information is mapped to all the screen IDs in the application flow in the electronic device 101, in 1:n, where n is positive integers greater than or equal to 2, one or more notification information 1211 and 1212 may be displayed on screen 1210.

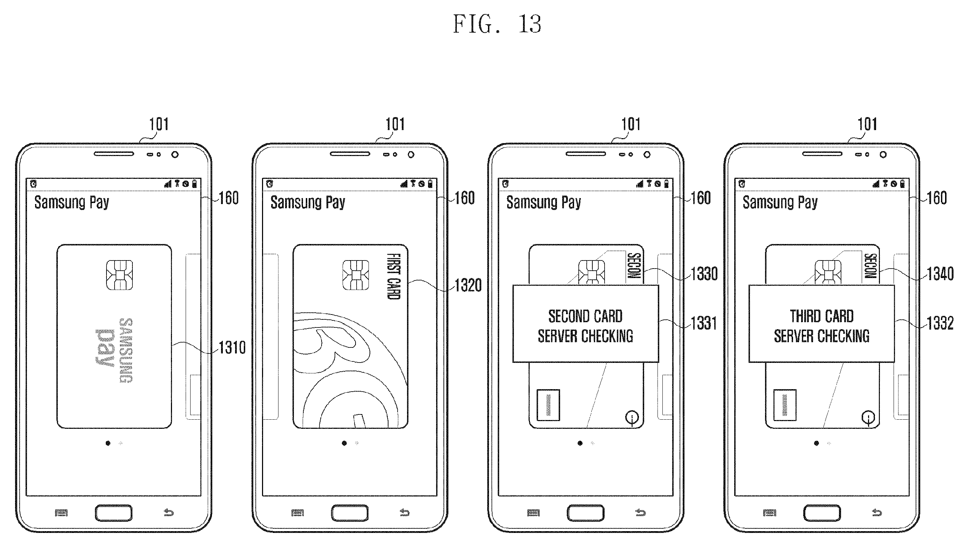

FIG. 13 is a diagram showing a user interface of an electronic device 101 related to an information providing method, according to various embodiments of the present disclosure.

In various embodiments, the electronic device 101 may execute an application (e.g., a payment application). The electronic device 101 may previously communicate tagging information (e.g., a tag value) regarding all screen IDs in the application flow with the server 106. Although the electronic device 101 does not directly communicate tagging information with the server 106, the server 106 obtains information regarding all screen IDs in the application flow when an application issues and has stored the obtained information.

In various embodiments, when a specific screen 1310, 1320, 13130 or 1340 in the application is activated, the electronic device 101 may transmit, to the server 106, tagging information and/or screen ID information regarding the specific screen(s) 1310, 1320, 1330, and/or 1340.

In various embodiments, when the server 106 receives tagging information and/or screen ID information regarding the specific screens 1310, 1320, 1330, and 1340 from the electronic device 101, the server 106 may search for notification information associated with tagging information and/or screen ID information. When the server 106 detects the desired notification information, it transmits the detected notification information to the electronic device 101.

In various embodiments, the server 106 may not transmit, to the electronic device 101, notification information regarding screens 1310 and 1320 (e.g., from among the specific screens 1310, 1320, 1330, and 1340), because there is no notification information associated with tagging information and/or screen ID information for screens 1310 and 1320.

In various embodiments, the server 106 may transmit, to the electronic device 101, notification information regarding screens 1330 and 1340 from among the specific screens 1310, 1320, 1330, and 1340, because there is notification information associated with tagging information and/or screen ID information for screens 1330 and 1340. In various embodiments, when a tag value is mapped to all the screen IDs in the application flow in the electronic device 101, in n:1, where n is positive integers greater than or equal to 2, or when notification information is mapped to all the screen IDs in the application flow in the electronic device 101, in n:1, where n is positive integers greater than or equal to 2, one or more notification information 1331 and 1332 may be displayed on screens 1330 and 1340. A second on screen 1330 and a third card on screen 1340 may be issued by the same card issuing company (e.g., 'Δ Δ card'). When the card issuing company needs to check the server, it enables the electronic device 101 to display the notification of the same information 1331 and 1332 on the screens 1330 and 1340 in order to temporarily stop the use of the second and third cards. The same notification information 1331 and 1332 displayed on the screens 1330 and 1340 may be 'Δ Δ card server is being checked' (which is not depicted in FIG. 13).

In various embodiments, the electronic device 101 may receive notification information, and display the received notification information on the specific screens 1330 and 1340 in the application, based on screen ID information and/or tagging information. The electronic device 101 may display notification information 1331 and 1332 on the display 160, overlapping with specific screens 1330 and 1340, respectively. The notification information 1331 and 1332 may be displayed in popup window format overlapping with specific screens, on the display 160 of the electronic device 101. Notification content may be information regarding service management, such as "second" or "third" "card server checking" messages 1331 and 1332, or alternatively, announcements regarding benefits or events by card issuing companies, etc.

In various embodiments, the electronic device may display at least part of the user interfaces (or specific screens) 1001, 1110, 1120, 1130, 1210, 1220, 1230, 1310, 1320, 1330, and 1340, via at least one of the following: text, image, icon, floating icon, tile, and widget. Alternatively, the electronic device may output at least part of the user interfaces, as sound or vibration via an audio module or a motor (e.g., a motor 298 shown in FIG. 2), which is functionally connected thereto, respectively. Alternatively, the electronic device may alter: content displayed on at least part of the user interfaces (1001, 1110, 1120, 1130, 1210, 1220, 1230, 1310, 1320, 1330, and 1340) or the screen; or visual effects for the content, such as size, location of display, transparency, luminosity, color, output mode from the electronic device to the outside, related to the screen, etc.

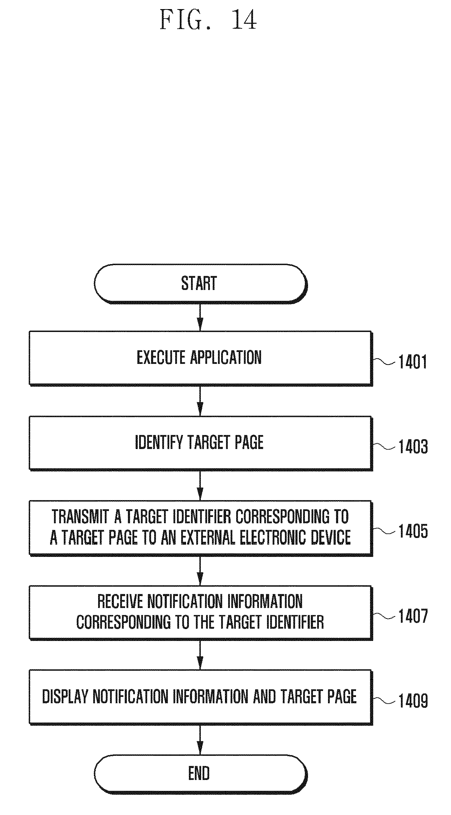

FIG. 14 is a flowchart that describes a method for an electronic device 101 to provide information, based on a target identifier, according to various embodiments of the present disclosure.

The electronic device 101 may execute an application, according to a command (e.g., control) of the processor 120 in operation 1401.

In various embodiments, the application executed by the electronic device 101 may include identifiers corresponding to respective screen pages included in the application flow. For example, a first page in an application may correspond to a first identifier; a second page to a second identifier; an N^{th} page to an N^{th} identifier; and so on. In various embodiments, the electronic device 101 (e.g., processor 120) is capable of executing the application, based on inputs (e.g., a message, a command, etc.) obtained from an external electronic device or user inputs (e.g., a touch, a double touch, a long press, a touch and move to right/left, a gesture, a drag and drop, etc.). Examples of the external electronic device are first 102 and second 104 external electronic devices and a server 106 shown in FIG. 1.

In various embodiments, at least one identifier may each include tag information from at least one page, correspondingly, respectively. For example, first and second identifiers may include tag information included in first and second pages, correspondingly, respectively. In various embodiments, at least one identifier may include the same tag information. For example, first and second identifiers may include the same tag information.

In various embodiments, when an application is executed on the background, the electronic device 101 may receive notification information (or other announcements) periodically, from an external electronic device or server 106.

The electronic device 101 may identify a target page, according to a command (e.g., control) of the processor 120, in operation 1403. In various embodiments, the electronic device 101 may identify a target page from among the screen pages included in an application flow, which are to be displayed on the display 160 functionally coupled to the electronic device 101. For example, the electronic device 101 may identify a target page of the screen pages included in an application flow from among the first page and/or second page, which is to be displayed on the display 160 functionally coupled to the electronic device 101.

In various embodiments, the identification of a target page in operation 1403 includes identifying and/or determining a target page, based on a user input (e.g., a voice or a gesture selecting or turning over a page).

In various embodiments, the identification of a target page in operation 1403 includes automatically determining a target page according to condition information. For example, when the order of pages (e.g., payment tools) in an application flow is preset, the order is dynamically altered, considering: a particular location (e.g., a particular store), or a user's previous pattern or preference regarding specific goods or a specific shopping website are considered, so that the target page is identified and/or determined. For example, when the order of pages (e.g., payment tools) in an application flow is preset, it means that the order of payment tools is predetermined. In various embodiments, the condition information may be a priority of payment tool (e.g., card) information included in the application, the use number of the payment tool information, or a combination thereof.

In various embodiments, the external electronic device (e.g., server 106) may arrange information regarding pages according to a condition as to whether related additional information (e.g., announcements) exists or a priority of related additional information (e.g., condition information), based on tagging information transmitted from the electronic device 101. The external electronic device (e.g., server 106) may arrange information regarding the pages in a way that differs from the application flow that has been stored, according to the arrangement result, and transmit the information regarding pages to the electronic device 101. The information regarding the pages may be arranged in a way differing from the application flow that has been stored, and may be formed in such a way that parts of the pages are skipped. The pages, thus arranged in a way that differs from the application flow, may further include information which enables the electronic device 101 to display pages in serial or parallel.

The electronic device 101 (e.g., processor 120) may transmit a target identifier corresponding to a target page, to an external electronic device (e.g., server 106) via the communication interface 170, according to a command (e.g., control) of the processor 120, in operation 1405. For example, when a first page is a target page, its identifier (e.g., first identifier) may be a target identifier.

The electronic device 101 (e.g., processor 120may receive notification information corresponding to a target identifier from an external electronic device (e.g., server 106) via the communication interface 170, according to a command (e.g., control) of the processor 120, in operation 1407.

When the electronic device 101 (e.g., processor 120) receives notification information from an external electronic device (e.g., server 106) via the communication interface 170, the electronic device 101 may display at least part of the notification information and the target page on the display 160, at least simultaneously, in operation 1409.

In various embodiments, notification information may be displayed on the display 160, overlapping with a target page. In various embodiments, notification information may overlap, in popup window form, with a target page, on the display 160. In various embodiments, notification information may create pages according to notification information, and the pages are displayed on the display 160. In various embodiments, notification information may be formed in such a way that at least one or more notification information are displayed on one target page on the display 160.

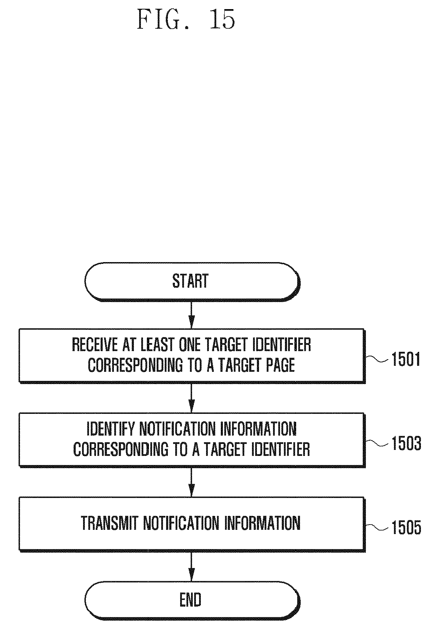

FIG. 15 is a flowchart that describes a method for an external electronic device (e.g., server 106) to provide information to an electronic device 101, based on tagging information, according to various embodiments of the present disclosure.

In various embodiments, the server 106 may include a processor, a memory, an input-output interface, a display, and a communication interface, which are identical or similar to those of the electronic device 101 shown in FIG. 1 or the electronic device 201 shown in FIG. 2.

The server 106 may receive at least one target identifier corresponding to a target page, from the electronic device 101, through a network, via the communication interface, according to a command (e.g., control) of the processor, in operation 1501.

The server 106 may identify notification information, stored in the memory, corresponding to a target identifier received from the electronic device 101, according to a command (e.g., control) of the processor, in operation 1503.

In various embodiments, the server 106 may search for notification information, stored in the memory, corresponding to a target identifier received from the electronic device 101, according to a command (e.g., control) of the processor, in operation 1503.

In various embodiments, the external electronic device (e.g., server 106may arrange information regarding pages, according to a condition as to whether related additional information (e.g., announcements) exists or a priority of related additional information (e.g., condition information), based on tagging information transmitted from the electronic device 101. The external electronic device (e.g., server 106) may arrange information regarding pages in a way that differs from the application flow that has been stored, according to the arrangement result, and transmit the information regarding pages to the electronic device 101. The information regarding pages are arranged in a way that differs from the application flow that has been stored, and may be formed in such a way that parts of the pages are skipped. The pages are arranged in a way that differs from the application flow, and may include information which enables the electronic device 101 to display pages in serial or parallel.

In various embodiments, the server 106 may determine a priority of notification information, based on condition information, according to a command (e.g., control) of the processor, as a part of operation 1503 (which is not depicted).

The server 106 may transmit the identified notification information to the electronic device 101, according to a command (e.g., control) of the processor, in operation 1505.

In various embodiments, when a priority of notification information is determined based on condition information, the server 106 may transmit the notification information including information regarding the priority to the electronic device 101, according to a command (e.g., control) of the processor, in operation 1505.

The operations (e.g., 1401 to 1409 or 1501 to 1503) performed by the methods referring to FIGs. 14 to 15 may be executed in serial, parallel, repetitive or heuristic fashion. For example, part of the operations can be executed in any other order, skipped, or executed with additional operations.

In the present disclosure, the terminology 'module' refers to a 'unit' including hardware, software, firmware or a combination thereof. For example, the terminology 'module' is interchangeable with 'unit,' 'logic,' 'logical block,' 'component,' 'circuit,' or the like. A 'module' may be the smallest unit or a part of an integrated component. A 'module' may be the smallest unit or a part thereof that can perform one or more functions. A 'module' may be implemented in mechanical or electronic mode. For example, a 'module' may include at least one of the following: an application specific integrated circuit (ASIC) chip, field-programmable gate array (FPGAs) and a programmable-logic device that can perform functions that are known or will be developed.

At least part of the method (e.g., operations) or devices (e.g., modules or functions) according to various embodiments may be implemented with instructions that can be conducted via various types of computers and stored in computer-readable storage media, as types of programming modules. One or more processors (e.g., processor 210) can execute instructions, thereby performing the functions. An example of the computer-readable storage media may be memory 130.

Examples of computer-readable media include: magnetic media, such as hard disks, floppy disks, and magnetic media (e.g., magnetic tape); optical media such as Compact Disc Read Only Memory (CD-ROM) disks and Digital Versatile Disc (DVD); magneto-optical media, such as floptical disks; and hardware devices such as read-only memory (ROM), random access memory (RAM), flash memory, etc. Examples of program instructions include machine code instructions created by assembly languages, such as a compiler, and code instructions created by a high-level programming language executable in computers using an interpreter, etc. The described hardware devices may be configured to act as one or more software modules to perform the operations of various embodiments described above, or vice versa.

In various embodiments, a storage medium stores instructions which enable at least one processor 120 to perform at least one process. At least one process includes: executing an application for supporting a plurality of pages including first and second pages which correspond to first and identifiers respectively, in a mobile electronic device 101; identifying a target page to be displayed on a display functionally connected to the mobile electronic device, from among the first and second pages; transmitting a target identifier corresponding to the target page from among the first and second identifiers, to external electronic devices 102, 104 and 106, via a network 162; receiving notification information corresponding to the target identifier from the external electronic devices 102, 104 and 106; and displaying at least part of the notification information and the target page, at least simultaneously.

In various embodiments, a storage medium stores instructions which enable at least one processor to perform at least one process. At least one process includes: receiving, by a server 106, at least one target identifier corresponding to a target page from among first and second pages corresponding to first and second identifiers respectively, which needs to be displayed on external electronic devices 101, 102, and 104, from the external electronic devices 101, 102, and 104, via a network 162; identifying, by the server 106, notification information corresponding to at least one target identifier; and transmitting, by the server 106, the notification information to the external electronic devices 101, 102, and 104 via the network 162.

In various embodiments, a storage medium stores instructions which enable at least one processor 120 to perform at least one process. At least one process includes: receiving, by an electronic device 101, at least one notification information corresponding to an application, including first and second identifiers corresponding to first and second pages respectively, from external electronic devices 101, 102, and 106, via a communication module (e.g., a communication interface 170); identifying, by the electronic device 101, a target page corresponding to at least one notification information, from among the first and second pages, based on the identifier; and displaying, by the electronic device 101, at least one notification information in association with the target page.

The method and apparatus for providing information in an electronic device, according to various embodiments of the present disclosure, are capable of dynamically managing notification (e.g., announcement) regarding a specific screen in an application. The method and apparatus are also capable of allowing a service operator to transmit an announcement (e.g., items of announcement) to a user without a user's intended action, so that the user can efficiently use services provided by the electronic device.

Modules or program modules according to various embodiments may include one or more components, remove part of them described above, or further include new components. The operations performed by modules, program modules, or other components, according to various embodiments, may be executed in serial, parallel, repetitive or heuristic fashion. Part of the operations can be executed in any other order, skipped, or executed with additional operations. The embodiments of the present disclosure are merely provided to assist in a comprehensive understanding of the disclosure and not suggestive of limitation. Therefore, it should be understood that many variations and modifications of the basic inventive concept herein described will still fall within the embodiments of the disclosure as defined in the appended claims.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein.

The control unit may include a microprocessor or any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), a Graphical Processing Unit (GPU), a video card controller, etc. In addition, it would be recognized that when a general purpose computer accesses code for implementing the processing shown herein, the execution of the code transforms the general purpose computer into a special purpose computer for executing the processing shown herein. Any of the functions and steps provided in the figures may be implemented in hardware, software or a combination of both and may be performed in whole or in part within the programmed instructions of a computer.

## Claims

1. A method of providing information comprising:
executing an application for supporting a plurality of pages containing first and second pages which correspond to first and second identifiers respectively, in a mobile electronic device;
identifying a target page to be displayed on a display functionally connected to the mobile electronic device, from among the first and second pages;
transmitting a target identifier corresponding to the target page from among the first and second identifiers, to an external electronic device, via a network;
receiving notification information corresponding to the target identifier from the external electronic device; and
displaying at least part of the notification information and the target page, at least simultaneously.

2. The method of claim 1, wherein the first and second identifiers comprise tag information contained in the first and second pages, respectively.

3. The method of claim 1, wherein the first and second identifiers comprise the same tag information.

4. The method of claim 1, wherein transmitting a target identifier comprises:
transmitting a target identifier in response to the display of the target page.

5. The method of claim 1, wherein:
the notification information comprises:
a plurality of notification information; and
displaying at least part of the notification information and the target page comprises:
displaying the plurality of notification information as one notification information.

6. The method of claim 1, wherein displaying at least part of the notification information and the target page comprises:
displaying the notification information, based on condition information related to the application or the mobile electronic device.

7. The method of claim 6, wherein the condition information comprises:
a location of the mobile electronic device, a priority of card information contained in the application, the use number of the card information, or a combination thereof.

8. The method of claim 1, further comprising:
determining whether an application is executed;
when an application is executed, determining whether a specific screen in the application is activated;
transmitting at least one or more tagging information to a server;
receiving notification information from the server, based on at least one or more tagging information; and
displaying the received notification information, based on at least one or more tagging information.

9. The method of claim 8, wherein transmitting at least one or more tagging information to a server comprises:
when the specific screen is activated, transmitting at least one or more tagging information to a server, and
wherein the tagging information is mapped to all screen IDs in the application flow.

10. The method of claim 8, further comprising:
transmitting at least one or more screen ID information to the server;
receiving the notification information based on at least one or more screen ID information;
displaying the received notification information, based on at least one or more screen ID information; and
determining whether an application is executed;
when an application is executed, determining whether a specific screen in the application is activated; and
when a specific screen in the application is activated, transmitting at least one or more screen ID information to the server.

11. An electronic device comprising:
a memory for storing first and second identifiers corresponding to first and second pages respectively, which are supported by applications;
a communication interface; and
a processor,
wherein the processor: receives at least one notification information corresponding to the application from an external electronic device via the communication interface; identifies a target page corresponding to at least one notification information from among the first and second pages, based on the identifier; and displays at least one notification information, associated with the target page.

12. The electronic device of claim 11, wherein the processor restrains from displaying at least one notification information, associated with other pages except for the target page from among the first page and the second page.

13. The electronic device of claim 11, wherein:
the notification information comprises the priority related to the notification information; and
the processor alters a condition as to whether to display at least one notification information or the target page, the order of display, the time of display, and the content of display, based on the priority.

14. The electronic device of claim 11, wherein the processor receives at least one notification information from the external electronic devices, based on the display of the target page, and transmits the identifier corresponding to the target page to the external electronic devices.

15. The electronic device of claim 11, wherein the processor receives at least one notification information from the external electronic devices, in response to the execution of the application.
